# EUROPEAN PATENT APPLICATION

(11) **EP 4 811 807 A1**
(43) Date of publication of application: **23.09.2026**
(21) Application number: 24891759.3
(22) Date of filing: 12.11.2024
(51) Int. Cl.: H04N 23/68, H04N 23/69, H04N 23/55, H04N 23/54

(54) **CAMERA DEVICE AND OPTICAL DEVICE COMPRISING SAME**

(30) Priority: 14.11.2023 KR 20230157595
(71) Applicant: LG Innotek Co., Ltd., Seoul 07796 (KR)
(72) Inventor: KIM, Chang Wook, Seoul 07796 (KR); PARK, Jung Bae, Seoul 07796 (KR); KIM, Han Saem, Seoul 07796 (KR)
(74) Representative: DREISS Patentanwälte PartG mbB
(86) International application number: PCT/KR2024/017887
(87) International publication number: WO 2025/105813

(57) **Abstract**

A camera device according to an embodiment of the present invention comprises: a lens assembly including a fixed lens group and a movable lens group movable in a first axis direction; an image sensor that detects light passing through the fixed lens group and the movable lens group; an optical member that irradiates light to the lens assembly and is tiltable with respect to a second or third axis perpendicular to the first axis; and a control unit that stores a correction value for compensating for misalignment of an optical axis of the lens assembly corresponding to zoom magnification information for the movable lens group, wherein the control unit controls the tilt of the optical member on the basis of the correction value, the zoom magnification for the movable lens group includes a minimum magnification, a maximum magnification, and an intermediate magnification between the minimum magnification and the maximum magnification, and the correction value sets an initial position of the optical member on the basis of the intermediate magnification and relates to a tilt amount of the optical member for the minimum magnification and the maximum magnification.

## Description

### [Technical Fields]

The teachings in accordance with exemplary and non-limiting embodiments of the present invention relate generally to a camera device and an optical instrument including the same.

### [Background Arts]

A camera device is a device used to capture subjects in photographs or videos, and is mounted on portable devices, drones, vehicles and other such equipment. To enhance image quality, camera devices may incorporate image stabilization (IS) functions-such as OIS (Optical Image Stabilizer)-to correct or prevent image shake caused by the user's movement, as well as auto-focusing (AF) and/or zooming functions.

### [Summary of Invention]

### [Technical Subjects]

The technical subject that the present invention seeks to solve is to provide a camera device and an optical instrument including the same.

### [Technical Solutions]

In order to solve the aforementioned technical subjects, a camera device according to an embodiment of the present invention may comprise: a lens assembly including a fixed lens group and a movable lens group movable in a first axis direction; an image sensor that detects light passing through the fixed lens group and the movable lens group; an optical member that irradiates light to the lens assembly and is tiltable with respect to a second or third axis perpendicular to the first axis; and a control unit that stores a correction value for compensating for misalignment of an optical axis of the lens assembly corresponding to zoom magnification information for the movable lens group, wherein the control unit controls the tilt of the optical member on the basis of the correction value, the zoom magnification for the movable lens group includes a minimum magnification, a maximum magnification, and an intermediate magnification between the minimum magnification and the maximum magnification, and the correction value sets an initial position of the optical member on the basis of the intermediate magnification and relates to a tilt amount of the optical member for the minimum magnification and the maximum magnification.

Preferably, but not necessarily, the correction value may relate to the initial position of the optical member for correcting the misalignment between the center of the fixed lens group and the center of the first lens group.

Preferably, but not necessarily, the control unit may use the correction value to move the lens assembly in the optical axis direction while controlling the tilt of the optical member, thereby performing zoom or autofocus operations.

Preferably, but not necessarily, the control unit may include a first driver for controlling the movement of the first lens group; and a second driver for storing the correction value and controlling the tilt of the optical member using the correction value.

Preferably, but not necessarily, the tilt amount of the optical member at the minimum magnification and the tilt amount of the optical member at the maximum magnification may be values in opposite directions.

Preferably, but not necessarily, the control unit may include a first position sensor for detecting the displacement of the optical member relative to the second axis; and a second position sensor for detecting the displacement of the optical member relative to the third axis.

Preferably, but not necessarily, the control unit may perform image stabilization (handshake correction operation) by controlling the tilt of the optical member using the correction values.

Preferably, but not necessarily, the movable lens group may include a zoom lens group and a focus lens group.

In order to solve the aforementioned technical subjects, a camera device according to an embodiment of the present invention may comprise: a lens assembly including a fixed lens group and a movable lens group movable in a first axis direction; an image sensor that detects light passing through the fixed lens group and the movable lens group; an optical member that irradiates light to the lens assembly and is tiltable with respect to a second or third axis perpendicular to the first axis; and a control unit that stores a correction value for compensating for misalignment of an optical axis of the lens assembly corresponding to zoom magnification information for the movable lens group, wherein the control unit controls the tilt of the optical member on the basis of the correction value, the zoom magnification for the movable lens group includes the maximum magnification and minimum magnification, and the correction value is generated by setting an initial position for the optical member based on the chart center at the farthest position among the chart center at minimum magnification and the chart center at maximum magnification relative to the image center, which is the center of the image area of the image sensor.

Preferably, but not necessarily, the control unit may tilt-correct the optical member in a first direction to compensate for the misalignment of the optical axis of the lens assembly corresponding to the minimum magnification, and the control unit may tilt-correct the optical member in a second direction, which is opposite to the first direction, to compensate for the misalignment of the optical axis of the lens assembly corresponding to the maximum magnification.

Preferably, but not necessarily, the correction value may relate to the initial position of the optical member for correcting the misalignment between the center of the fixed lens group and the center of the first lens group.

Preferably, but not necessarily, the control unit may perform a zoom or autofocus operation by moving the lens assembly in the optical axis direction while controlling the tilt of the optical member using the correction value.

Preferably, but not necessarily, the control unit may include a first driver for controlling the movement of the first lens group; and a second driver for storing the correction value and controlling the tilt of the optical member using the correction value.

Preferably, but not necessarily, the control unit may include a first position sensor for detecting displacement of the optical member relative to the second axis, and a second position sensor for detecting displacement of the optical member relative to the third axis.

Preferably, but not necessarily, the control unit may use the correction value to control the tilt of the optical member in order to perform image stabilization.

### [Advantageous Effects]

According to these embodiments, by adjusting the tilt of the optical member of the second actuator, the horizontal path of the light irradiated on the lens assembly of the first actuator can be altered, thereby compensating for any deviation (or tilt) of the optical center caused by misalignment of the lens assembly or the lens.

As the embodiments can correct the deviation (or tilt) of the optical center caused by misalignment of the lens assembly or lens, they can prevent image distortion caused by the tilt of the optical center.

As the embodiments can prevent image distortion, it can improve the resolution of the image sensor.

When correcting the deviation (or tilt) of the optical center, the embodiments can prevent collisions within the physical range where optical members tilt, thereby preventing malfunctions.

### [Brief Description of Drawings]

FIG. 1 is a perspective view of a camera device according to an embodiment.
FIG. 2 is an exploded perspective view of the camera device shown in FIG. 1.
FIG. 3 is a cross-sectional view of the camera device shown in FIG. 1 taken in the AB direction.
FIG. 4 is a perspective view of the second actuator shown in FIG. 1.
FIG. 5 is an exploded perspective view of the second actuator.
FIG. 6a is a front perspective view of the holder shown in FIG. 5.
FIG. 6b is a rear perspective view of the holder.
FIG. 6c is a lower perspective view of the holder.
FIG. 7 is an exploded perspective view of the holder, the mover plate, and the magnetic body support unit.
FIG. 8a is an exploded perspective view of the holder and the magnetic body support unit, with the optical member, the mover plate, and the OIS magnet combined.
FIG. 8b is an assembled perspective view of the optical member, the mover plate, the OIS magnet, and the magnetic body support unit.
FIG. 9a is a first perspective view of the first housing.
FIG. 9b is a second perspective view of the first housing.
FIG. 9c is an exploded perspective view of the first housing and the second magnetic body.
FIG. 10a is a perspective view of the first housing, holder, optical member, first circuit substrate, and cover plate.
FIG. 10b is a diagram illustrating the electromagnetic force and the movement of the mover plate resulting from the interaction between the first to third OIS magnets and the first to third coil units.
FIG. 11a is a cross-sectional view of the second actuator in the CD direction shown in FIG. 4.
FIG. 11b is a cross-sectional view of the second actuator in the EF direction shown in FIG. 4.
FIG. 12 is a perspective view of the first actuator and the image sensing unit according to an embodiment.
FIG. 13a is a first exploded perspective view of the first actuator and image sensing unit shown in FIG. 12.
FIG. 13b is a second exploded perspective view of the first actuator and image sensing unit shown in FIG. 12.
FIG. 14a is a cross-sectional view along the ab line of the first actuator and the image sensing unit shown in FIG. 12.
FIG. 14b is a cross-sectional view along the cd line of the first actuator and the image sensing unit shown in FIG. 12.
FIG. 15 is an exploded perspective view of the first actuator.
FIG. 16a is an exploded perspective view of the second housing.
FIG. 16b is a perspective view of the body of the second housing.
FIG. 17a is a first perspective view of the first and second guide units and the lens unit.
FIG. 17b is a second perspective view of the first and second guide units and the lens unit.
FIG. 18 is an exploded perspective view of the first and second magnets and the lens unit.
FIG. 19 shows a functional block diagram of the camera device according to an embodiment.
FIG. 20 is a flowchart illustrating a control method of the control unit for performing zooming and AF or performing image stabilization in the camera device according to an embodiment.
FIG. 21 illustrates an example of a method for generating a correction value to compensate for deviations caused by lens misalignment.
FIG. 22 illustrates the correction of deviations caused by lens assembly or lens misalignment, as well as deviations caused by the movement of the OIS moving unit.
FIG. 23 is a flowchart illustrating a control method of a control unit for performing zooming and AF, or performing image stabilization, in a camera device according to another embodiment.
FIG. 24 is a diagram illustrating factors to be considered when generating correction values to compensate for deviations caused by lens misalignment. FIGS. 25 and 26 are diagrams illustrating the process of generating OC compensation and OC Shift correction values, taking into account the physical limitations of the OIS mechanical stroke.
FIG. 27 is a diagram illustrating a method for generating correction values for OC compensation and OC Shift compensation that differs from the methods described in FIGS. 25 and 26.
FIG. 28 illustrates a method for generating correction values to compensate for deviations caused by lens misalignment corresponding to zoom magnification information.
FIG. 29 illustrates the deviations or tilt amounts corresponding to the sampling points obtained by the method according to the embodiment of FIG. 28.
FIG. 30a illustrates an embodiment relating to the provision of information and correction values regarding zoom and focus positions.
FIG. 30b illustrates another embodiment relating to the provision of information and correction values regarding zoom and focus positions.
FIG. 30c illustrates yet another embodiment relating to the provision of information and correction values regarding zoom and focus positions.
FIG. 30d illustrates yet another embodiment relating to the provision of information and correction values regarding zoom and focus positions.
FIG. 31 illustrates a perspective view of an optical instrument according to an embodiment.
FIG. 32 illustrates a schematic diagram of the optical instrument shown in FIG. 31.

### [Best Modes]

Hereinafter, a preferred embodiment of the present invention will be described in detail with reference to the accompanying drawings.

However, the technical concept of the present invention is not limited to the embodiments described herein but may be implemented in various different forms; provided that they fall within the scope of the technical concept of the present invention, one or more of the components of the embodiments may be selectively combined or substituted.

Furthermore, the terms used in these embodiments (including technical and scientific terms), unless explicitly defined otherwise, may be interpreted in the sense generally understood by a person skilled in the art to which these embodiments belong; terms in common usage, such as those defined in dictionaries, may be interpreted in light of their meaning within the context of the relevant technology.

Furthermore, the terms used in this embodiment are intended to describe the embodiments and are not intended to limit the invention.

In this specification, unless specifically stated otherwise in the text, the singular form may include the plural form, and where it is stated as "at least one (or one or more) of A and B, C", it may include one or more of all possible combinations of A, B and C.

Furthermore, in describing the components of these embodiments, terms such as 'first', 'second', 'A', 'B', '(a)', and '(b)' may be used. These terms are intended merely to distinguish the component from other components and do not limit the nature, order, or sequence of the component in question.

Furthermore, where it is stated that a component is 'connected', 'coupled' or 'joined' to another component, this may include not only cases where the component is directly 'connected', 'coupled' or 'joined' to that other component, but also cases where it is 'connected', 'coupled' or 'joined' via another component situated between the component and the other component.

Furthermore, where it is stated that a component is formed or arranged 'above' or 'below' another component, 'above' or 'below' includes not only cases where the two components are in direct contact with one another, but also cases where one or more other components are formed or arranged between the two components. Furthermore, when expressed as "above" or "below", this may include not only the upward direction relative to a single component, but also the downward direction.

Hereinafter, with reference to the attached drawings, the camera device according to the embodiments, and the optical instruments incorporating the same, will be described as follows. For the sake of convenience in the description, the camera device according to the embodiments is described using a Cartesian coordinate system (x, y, z); however, it may also be described using other coordinate systems, and the embodiments are not limited thereto. In each figure, the X-axis and Y-axis may denote directions perpendicular to the Z-axis, which corresponds to the optical axis (OA) direction. Furthermore, the direction of the Z-axis, which corresponds to the optical axis (OA), may be referred to as the 'first direction', the direction of the X-axis as the 'second direction', and the direction of the Y-axis as the 'third direction'. Furthermore, the Y-axis may be referred to as the 'first axis', and the direction of the Y-axis as the 'first axis direction'; the X-axis may be referred to as the 'second axis', and the direction of the X-axis as the 'second axis direction'.

Moreover, the term 'terminal' used hereinafter may be replaced by pad, electrode, or conductive layer.

Furthermore, the term 'code value' may be replaced with "data" or 'digital value'.

Moreover, in the embodiment, regarding the coupling between a protrusion and a hole for joining two components, one of the components may be a coupling protrusion (or coupling hole), whilst the other may correspondingly be a coupling hole (or coupling protrusion).

The camera device according to the embodiment can perform image stabilization, autofocus and zoom functions. The "image stabilization function" may involve moving the lens in a direction perpendicular to the optical axis or tilting the lens relative to the optical axis in order to counteract vibrations (or movement) caused by the user's hand shake. Furthermore, the 'autofocus function' may be a function that automatically adjusts the focus on the subject by moving the lens along the optical axis in accordance with the distance to the subject, in order to obtain a clear image of the subject on the image sensor. The "zoom function" may be a zooming function that increases or decreases the magnification of a distant subject through a zoom lens for the purpose of changing the zoom magnification.

Hereinafter, the term "camera device" may be expressed interchangeably as "camera", "camera module", "imaging device" or "imaging apparatus".

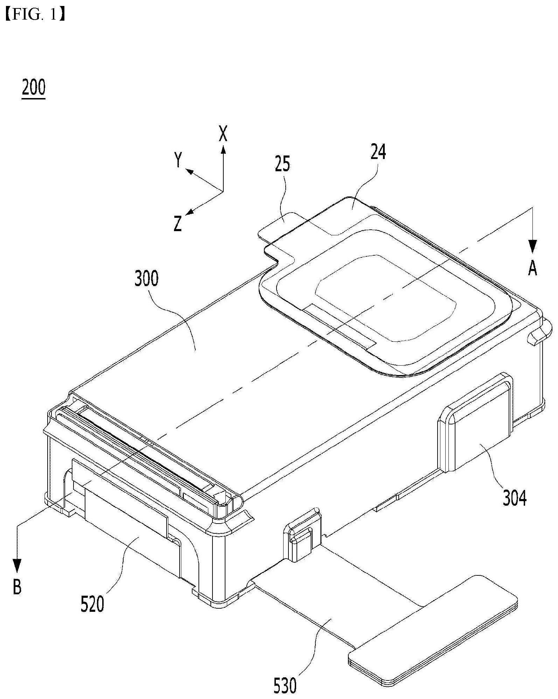

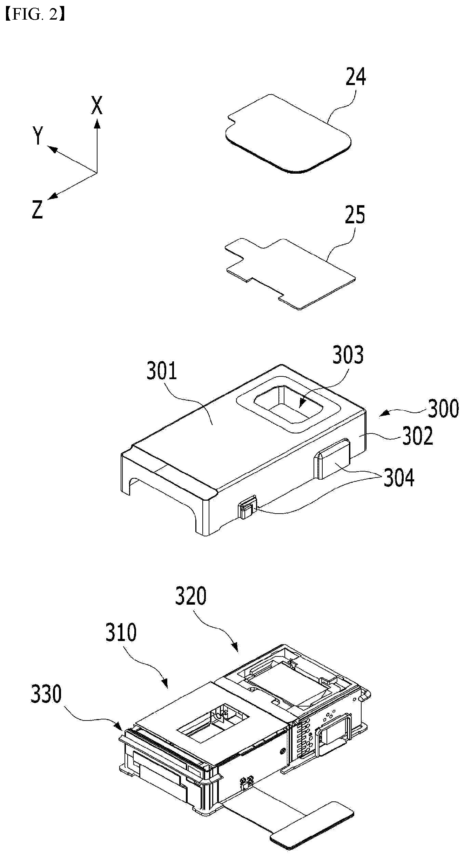

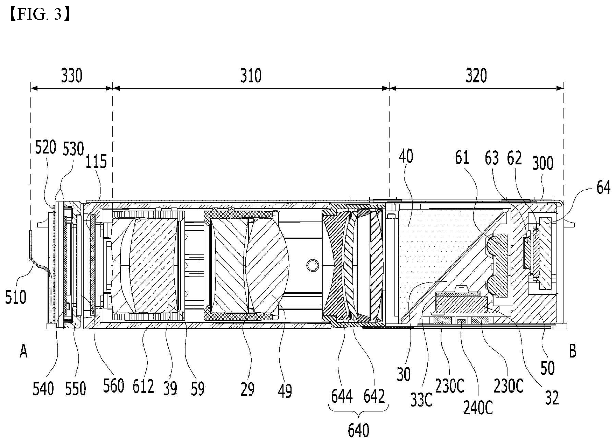

FIG. 1 is a perspective view of a camera device (200) according to an embodiment; FIG. 2 is an exploded perspective view of the camera device (200) shown in FIG. 1; and FIG. 3 is a cross-sectional view of the camera device in the AB direction shown in FIG. 1.

Referring to FIGS. 1 to 3, the camera device (200) may include a first actuator (310), a second actuator (320), and an image sensing unit (330).

The second actuator (320) can move an optical member (40), thereby performing OIS (Optical Image Stabilizer) operations to perform image stabilization, and may be referred to as the "second drive unit" or "OIS drive unit".

The second actuator (320) can alter the optical path. For example, the second actuator (320) may include an optical member (40) that alters the optical path. The second actuator (320) may also be referred to as an optical path alteration unit.

The first actuator (310) can move the lens assemblies (622, 624) in the optical axis direction, thereby performing autofocus and/or zoom functions, and may be referred to as the 'first drive unit' or 'AF and zoom drive unit'. The first actuator (310) may be referred to as the 'second actuator', and the second actuator (320) may be referred to as the 'first actuator'.

For example, the first actuator (310) may be disposed at the rear end of the second actuator (320) and may be coupled to the second actuator (320).

The image sensing unit (330) may receive and detect light that has passed through the optical member (40) of the second actuator (320) and the lens assemblies (640, 622, 624) of the first actuator (310), and convert the detected light into an electrical signal.

The camera device (200) may further comprise a cover member (300). The cover member (300) may be box-shaped, with an open bottom and comprising a upper plate (301) and side plates (302). The cover member (300) may accommodate the camera device (200), which includes a first actuator (310), a second actuator (320) and an image sensing unit (330).

An opening (303) or hole may be formed in the upper plate (301) of the cover member (300) to expose the incident surface of the optical member (40).

Furthermore, the camera device (200) may further comprise a bracket for accommodating the first actuator (310), the second actuator (320) and the image sensing unit (330). The bracket may be provided with holes or through-holes for accommodating the first actuator (310), the second actuator (320) and the image sensing unit (330). At least one opening may be formed on the side or lateral surface of the bracket.

At least one projection (304) may be formed on the side plate (302) of the cover member (300) to engage with at least one opening in the bracket. The at least one projection (304) may protrude from the side plate (302) in a direction perpendicular to the optical axis (e.g., the Y-axis direction).

The cover member (300) may be formed from a sheet of metal, but is not limited thereto, and may also be formed from plastic or resin. Furthermore, the cover member (300) may be made of a material that blocks electromagnetic waves.

The camera device (200) may further comprise a protective film (24) disposed on the upper plate (301) of the cover member (300) and covering the opening (303) of the cover member (300). The protective film (24) may be formed from a light-transmissive material, may prevent foreign matter from entering the camera assembly (200), and may protect the optical member (40) from impacts and the like. Furthermore, the camera device (200) may further comprise a protective tape (25) disposed between the protective film (24) and the upper plate (301) to attach the protective film (24) to the upper plate (301).

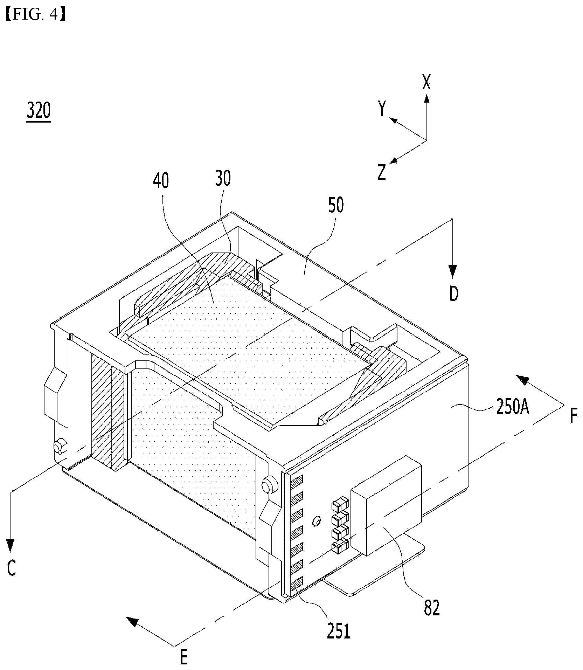

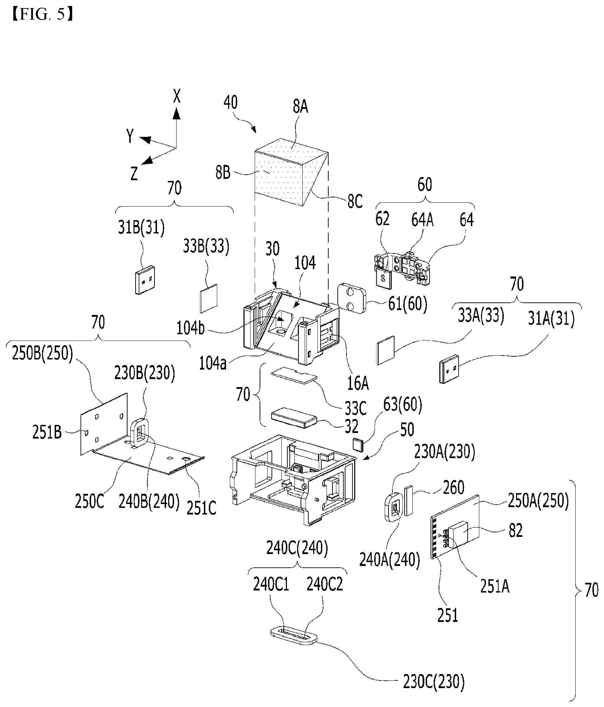

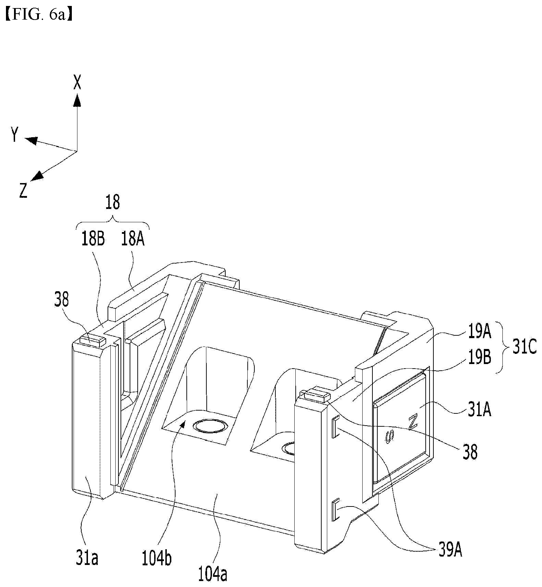

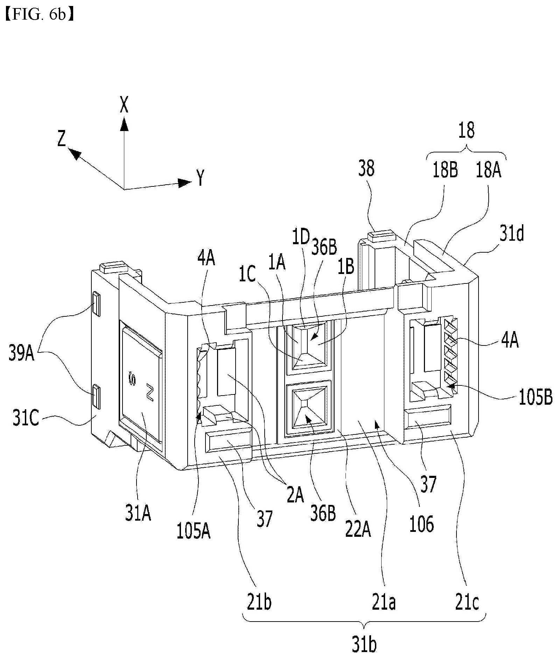

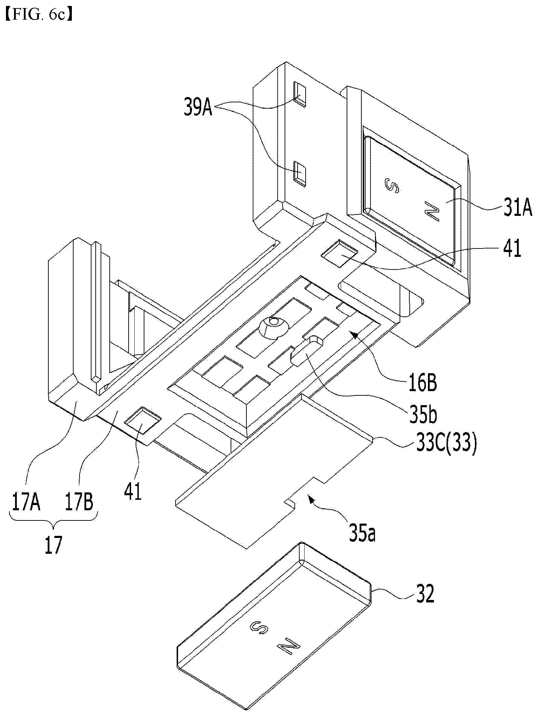

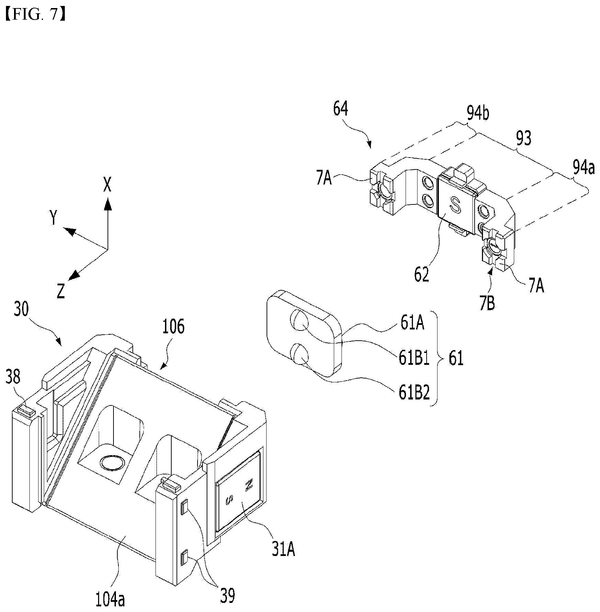

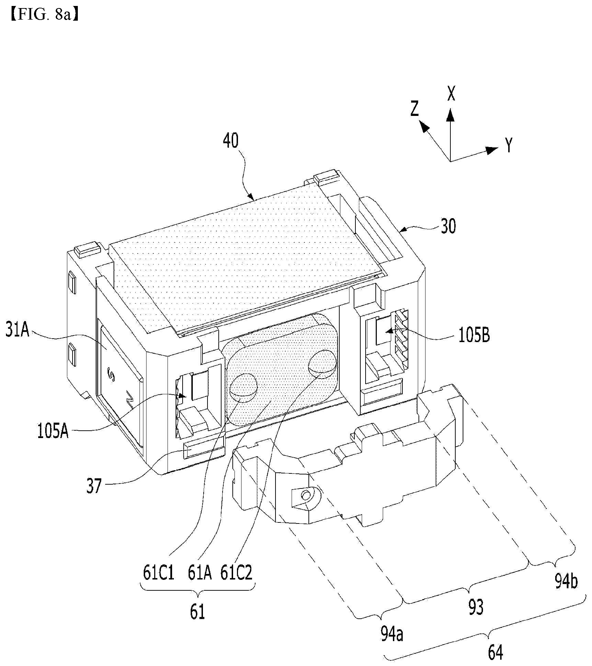

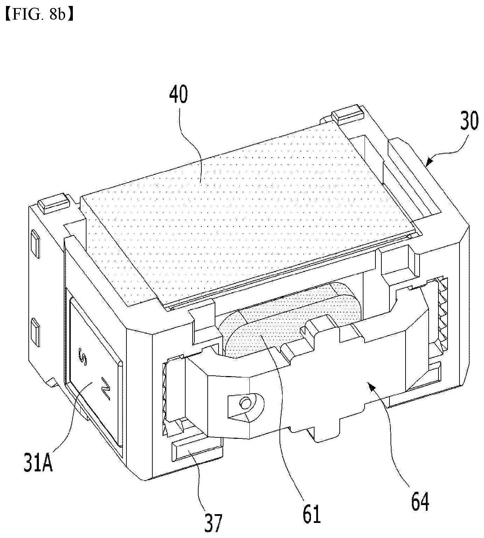

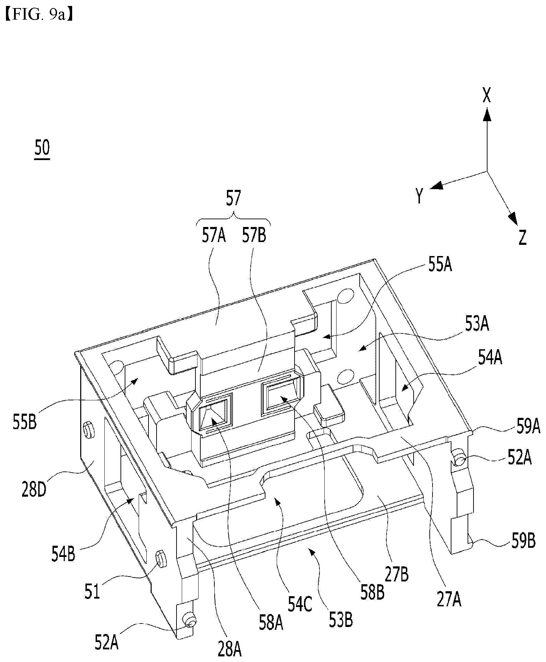

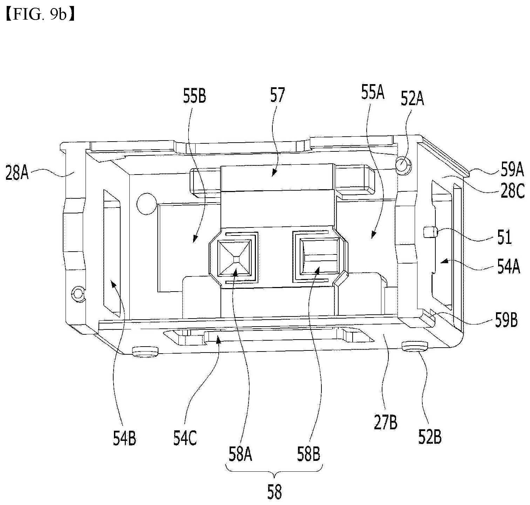

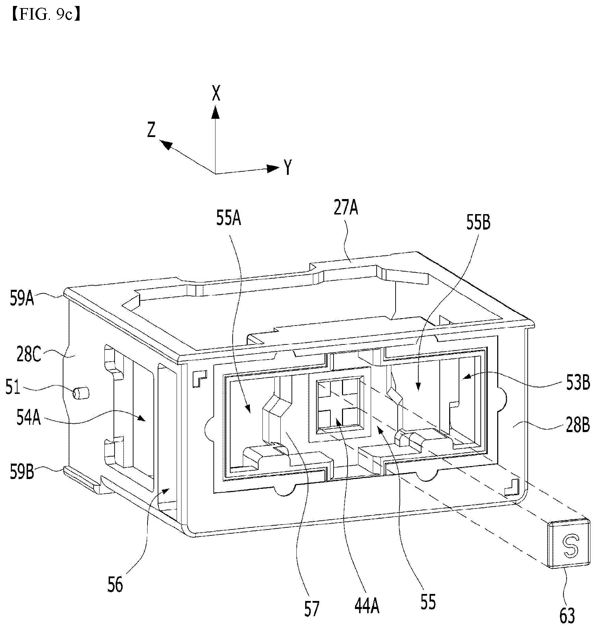

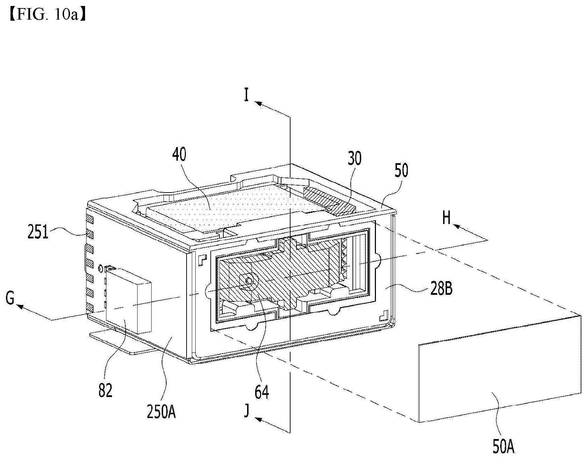

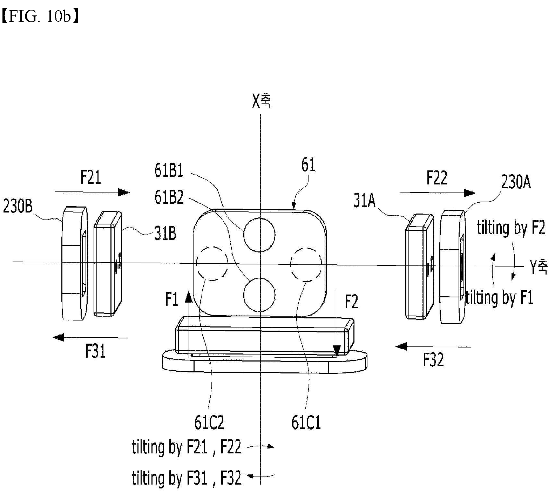

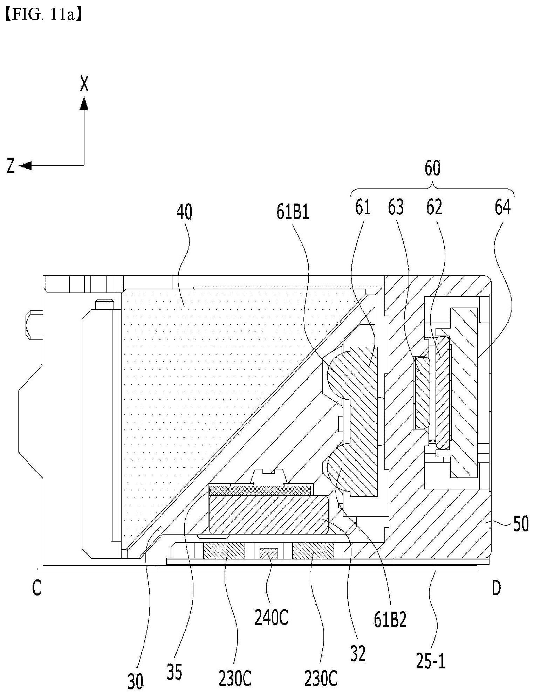

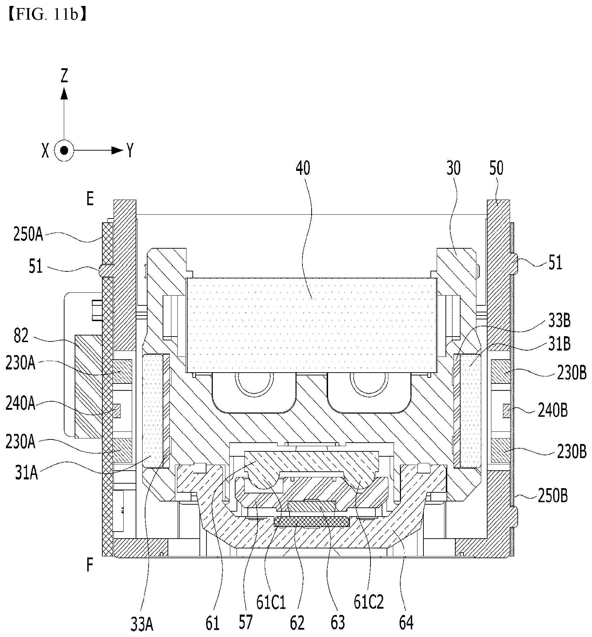

FIG. 4 is a perspective view of the second actuator (320) shown in FIG. 1, FIG. 5 is an exploded perspective view of the second actuator (320), FIG. 6a is a front perspective view of the holder (30) shown in FIG. 5, FIG. 6b is a rear perspective view of the holder (30), FIG. 6c is a lower perspective view of the holder (30), FIG. 7 is an exploded perspective view of the holder (30), the mover plate (61), and the magnetic body support unit (64), and FIG. 8a is an exploded perspective view of the optical member (40), the mover plate (61) and the OIS magnet (31) combined with the holder (30) and the magnetic body support unit (64), and FIG. 8b is a perspective view showing the optical member (40), the mover plate (61), OIS magnet (31) and the magnetic body support unit (64) assembled, FIG. 9a is a first perspective view of the first housing (50), FIG. 9b is a second perspective view of the first housing (50), FIG. 9c is a perspective view showing the first housing (50) and the second magnet (63) separated, and FIG. 10a is a perspective view of the first housing (50), the holder (30), the optical member (40), the first circuit substrate (250A), and the cover plate (50A), FIG. 10b is a diagram illustrating the electromagnetic force resulting from the interaction between the first to third OIS magnets (31A, 31B, 32) and the first to third coil units (230A to 230C) and the movement of the mover plate, FIG. 11a is a cross-sectional view of the second actuator (320) in the CD direction shown in FIG. 4, and FIG. 11b is a cross-sectional view of the second actuator (320) in the EF direction shown in FIG. 4.

Referring to FIGS. 4 to 11b, the second actuator (320) may include an optical member (40) that alters the light path so that light passes through an opening (303) in the cover member (300) and is incident upon the first actuator (310), and a second drive unit (70) that rotates the optical member (40) by a predetermined angle in a direction perpendicular to the optical axis direction (e.g., the X-axis direction or the Y-axis direction).

The optical member (40) may include a reflective unit capable of altering the direction of propagation of the light. For example, the optical member (40) may be a prism that reflects light, but is not limited thereto; in other embodiments, it may be a mirror.

The optical member (40) may alter the optical path of the incident light to an optical axis parallel to the center axis (Z) of the lens unit, thereby converting the incident light into parallel light, and the parallel light may reach the image sensor (540) by passing through the first lens assembly (640), the second lens assembly (622) and the third lens assembly (624).

For example, the optical member (40) may include an incident surface (8A) and an exit surface (8B), and may reflect light incident on the incident surface (8A) to emit it from the exit surface (8B). For example, the optical member (40) may be a right-angled prism comprising an incident surface (8A), a reflective surface (8C), and an exit surface (8B). For example, the angle between the incident surface (8A) and the exit surface (8B) may be a right angle.

Furthermore, for example, the first internal angle between the incident surface (8A) and the reflective surface (8C) and the second internal angle between the exit surface (8B) and the reflective surface (8C) may each be between 30 and 60 degrees. For example, the first and second internal angles may each be 45 degrees, but this is not limited thereto. Furthermore, by altering the optical path via the optical member (40), the thickness of the camera device (200) in a direction perpendicular to the incident surface (8A) of the optical member (40) can be reduced, thereby reducing the thickness of the mobile device or terminal (200A) on which the camera device (200) is mounted.

For example, the second actuator (320) may include a first housing (50), a holder (30) disposed within the first housing (50), an optical member (40) disposed within the holder (30), a support unit (60) disposed between the holder (30) and the housing (50), and a second drive unit (70).

Referring to FIGS. 5, 6a to 6c, the holder (30) may include a seating (accommodation) unit (104) for the optical member (40) to be disposed or mounted therein. The seating unit (104) may be in the form of a groove and may provide a mounting surface (104a) (or seating surface) for the reflective surface (8C) of the optical member (40) to be disposed. For example, the mounting surface (104a) may be an inclined surface inclined relative to the optical axis direction.

For example, an adhesive may be applied to the mounting surface (104a) of the holder (30) for attaching the optical member (40), and at least one groove (104b) may be formed in the mounting surface (104a) to accommodate the adhesive.

For example, the holder (30) may include a first opening exposing the incident surface (8A) of the optical member (40) and a second opening exposing the exit surface (8B) of the optical member (40). For example, the first opening may be disposed on the upper side of the holder (30), and the second opening may be disposed on a side (front outer side, 31a) of the holder (30) facing the lens assembly (e.g., 640) of the first actuator (310). The exit surface (8B) of the optical member (40) mounted on the holder (30) may be disposed to face the lens assembly (e.g., 640) of the first actuator (310).

The upper surface (18) of the holder (30) may include a first surface (18A) and a second surface (18B) that is offset (staircased or level difference) from the first surface (18A) in a second direction (e.g., the X-axis direction). The first surface (18A) may be arranged adjacent to or in contact with the rear outer surface (31b) of the holder (30), and the second surface (18B) may be disposed adjacent to or in contact with the front outer surface (31a) of the holder (30). The second surface (18B) may be positioned lower than the first surface (18A). For example, the second surface (18B) may be positioned closer to the lower surface (19) of the holder (30) than the first surface (18A).

As the second surface (18B) is at a different level (staircased) from the first surface (18A), spatial interference between the holder (30) and the first housing (50) can be prevented when the holder (30) tilts or rotates by a predetermined angle in a second direction (e.g., the X-axis direction).

For example, at least one stopper (38) may be formed on the upper surface (e.g., the second surface (18B)) of the holder (30). The stopper (38) may be a projection or protrusion extending upwards from the upper surface (e.g., the second surface (18B)) of the holder (30). For example, a stopper (38) may be formed on the upper surface of each of first and second side portions of the holder (30). The stopper (38) may restrict tilting or rotation of the holder (30) in a second direction. For example, the height of the upper surface of the stopper (38) may be lower than or equal to the height of the first surface (18A).

The holder (30) may include first and second side portions (or outer surfaces) (31c, 31d) facing one another. For example, the seating unit (104) may be located between the first side portion (31c) and the second side portion (31d) of the holder (30). For example, the first side portion (31c) and the second side portion (31d) may be positioned on opposite sides or facing each other in a third direction (e.g., the Y-axis direction).

Each of the first and second side portions (31c, 31d) of the holder (30) may include a first outer surface (19A) and a second outer surface (19B) having a staircase with respect to the first outer surface (19A) in the third direction (e.g., the Y-axis direction). The first outer surface (19A) may be positioned adjacent to or in contact with the rear outer surface (31b) of the holder (30), and the second outer surface (19B) may be positioned adjacent to or in contact with the front outer surface (31a) of the holder (30). The second outer surface (19B) may be positioned closer to the inner surface of the holder (30) than the first outer surface (19A).

As the second outer surface (19B) of the holder (30) is offset (staircased) from the first outer surface (19A), spatial interference between the holder (30) and the first housing (50) can be prevented when the holder (30) tilts or rotates by a predetermined angle in a third direction (e.g., the Y-axis direction).

For example, at least one stopper (39A) may be formed on the first and second side portions (e.g., the second outer surface (19B)) of the holder (30). The stopper (39A) may be a projection or protrusion extending from the outer surface (e.g., the second outer surface (19B)) of each of the first and second side portions (31c, 31d) of the holder (30). The stopper (39A) may restrict the tilt or rotation of the holder (30) in the third direction. For example, the height of the stopper (39A) relative to the second outer surface (19B) may be less than or equal to the staircase between the first outer surface (19A) and the second outer surface (19B).

The lower surface (17) of the holder (30) may include a first surface (17A) and a second surface (17B) having a staircase with respect to the first surface (17A) in a second direction (for example, the X-axis direction). The first surface (17A) may be positioned adjacent to or in contact with the front outer surface (31a) of the holder (30), and the second surface (17B) may be positioned adjacent to or in contact with the rear outer surface (31b) of the holder (30). The first surface (17A) may be positioned lower than the second surface (17B). For example, the second surface (17B) may be positioned closer to the upper surface (18) of the holder (30) than the first surface (17A).

As the second surface (17B) of the lower surface (17) of the holder (30) is staircased (at a different level) from the first surface (17A), when the holder (30) is tilted or rotated by a predetermined angle in the second direction (e.g., the X-axis direction), spatial interference between the holder (30) and the second OIS coil (230C) can be prevented.

For example, at least one stopper (41) may be formed on the lower surface of the holder (30) (e.g., the second surface (17B)). The stopper (41) may be a projection or protrusion extending downwards from the lower surface of the holder (30) (e.g., the second surface (17B)). The stopper (41) may restrict the tilt or rotation of the holder (30) in the second direction. For example, relative to the second surface (17B), the protrusion length of the stopper (41) may be less than or equal to the staircase between the first surface (17A) and the second surface (17B) of the lower surface (17) of the holder (30).

The holder (30) may include a first seating groove (16A) for disposing or seating a first OIS magnet (31) and a second seating groove (16B) for disposing or seating a second OIS magnet (32).

For example, the first seating groove (16A) may be formed on the outer surface (e.g., the first outer surface (19A)) of each of the first and side portions (31c, 31d) of the holder (30). For example, the first seating groove (16A) may be in the form of a groove recessed from the first outer surface (19A) of each of the first and side portions (31c, 31d) of the holder (30).

For example, the second seating groove (16B) may be formed on the lower surface (17) of the holder (30) (e.g., the second surface (16B)). For example, the second seating groove (16B) may be in the form of a recess recessed from the lower surface (17) of the holder (30) (e.g., the second surface (16B)).

Referring to FIG. 6b, the rear outer surface (31b) of the holder (30) may include a first surface (21a), a second surface (21b) adjacent to or in contact with the first side portion (31c), and a third surface (21c) adjacent to or in contact with the second side portion(31d).

When viewed from the rear, the first surface (21a) may be disposed centrally, the second surface (21b) may be disposed to the left of the first surface (21a), and the third surface (21c) may be disposed to the right of the first surface (21a).

The second surface (21b) and the third surface (21c) may each have a staircase relative to the first surface (21a) in a first direction (e.g., the Z-axis direction). For example, the first surface (21a) may be positioned closer to the inner surface of the holder (30) than the second surface (21b) and the third surface (21c) respectively. For example, the second surface (21b) and the third surface (21c) may be located on the same plane. Alternatively, for example, the height difference between the first surface (21a) and the second surface (21b) may be the same as that between the first surface (21a) and the third surface (21c), but this is not limited thereto; in other embodiments, the two may differ from one another.

For example, a groove (106) for seating or accommodating a mover plate (61) may be formed on the rear outer surface (31c) of the holder (30). For example, the groove (106) may be disposed at the center of the rear outer side (31c) and may be recessed from the rear outer side (31c).

The holder (30) may be formed on the first surface (21a) of the rear outer surface (31c) and may include at least two grooves (36A, 36B) corresponding to at least two forward projections (61B1, 61B2) of the mover plate (61). For example, the at least two grooves (36A, 36B) of the holder (30) may be disposed at a distance from one another in a second direction and may be formed on the bottom surface of the groove (106).

For example, the holder (30) may include a first groove (36A) formed on a first surface (21a) of the rear outer surface (31c), and a second groove (36B) spaced apart from the first groove (36A) and positioned above the first groove (36A). In another embodiment, the first groove may be positioned above the second groove.

The first groove (36A) may include a bottom surface and a plurality of side surfaces. Each of the plurality of side surfaces of the first groove (36A) may have the same shape. In FIG. 6b, the number of side surfaces of the first groove (36A) is four, but this is not limiting, and in other embodiments, there may be five or more.

For example, the areas of the multiple side surfaces of the first groove (36A) may be identical to one another. The multiple side surfaces of the first groove (36A) may be symmetrical to one another in a second direction and a third direction. For example, the bottom surface of the first groove (36A) may be square or circular, but is not limited thereto.

For example, the second groove (36B) may include a bottom surface and a plurality of side surfaces (1A to 1D). The area of at least one of the plurality of side surfaces (1A to 1D) of the second groove (36B) may differ from the area of at least one other of the plurality of side surfaces (1A to 1D) of the second groove (36B).

For example, two side surfaces (1C, 1D) of the second groove (36B) facing each other in the second direction may have symmetrical shapes, and the areas of the two side surfaces (1C, 1D) may be identical. Furthermore, two side surfaces (1A, 1B) of the second groove (36B) facing each other in a third direction may have symmetrical shapes, and the areas of the two side surfaces (1A, 1B) may be identical.

The first area of each of the side surfaces (1C, 1D) of the second groove (36B) facing in the second direction may differ from the second area of each of the side surfaces (1A, 1D) of the second groove (36B) facing in the third direction.

For example, the first area may be smaller than the second area. In other embodiments, the first area may be larger than the second area. For example, the bottom surface of the second groove (36B) may be rectangular or elliptical, but is not limited thereto.

If both the first and second grooves of the holder (30) have the same shape as the first groove (36A) shown in FIG. 6b, manufacturing tolerances may arise in relation to the first and second grooves of the holder (30) and/or the front projections of the mover plate (61), and as a result, the front projections of the mover plate (61) may fail to engage properly or securely with the first and second grooves of the holder (30).

In the embodiment, by making the shape of the second groove (36B) different from that of the first groove (36A), the coupling margin between the front projections (61B1, 61B2) of the mover plate (61) and the first and second grooves (36A, 36B) of the holder (30) can be increased. In other words, even if the aforementioned manufacturing tolerances occur, the front projections (61B1, 61B2) of the mover plate (61) can be fitted appropriately or securely into the first and second grooves (36A, 36B) of the holder (30) via the second groove (36B), thereby enabling stable OIS operation.

A protrusion (22A) or a staircase may be formed around the first groove (36A) and the second groove (36B). The protrusion (22A) may be formed as a portion projecting from the first surface (21a) of the rear outer side (31c). A lubricant may be disposed between the front projections (61B1, 61B2) and the first and second grooves (36A, 36B), and the protrusion (22A) may prevent the lubricant from overflowing.

At least one coupling groove (105A, 105B) may be formed on the rear outer surface (31c) of the holder (30) for engagement with a magnetic body support unit (64).

For example, the holder (30) may include a first coupling groove (105A) formed on a second surface (21b) of the rear outer side surface (31c), and a second coupling groove (105B) formed on a third surface (21c).

For example, at least one projection (2A) (or groove) may be formed on at least one of the side surfaces and bottom surfaces of each of the first and second coupling grooves (105A, 105B). For example, at least one protrusion (2A) may correspond to at least one groove (7B) of the magnetic body support unit (64) or be formed at a position corresponding to at least one groove (7B).

Grooves (4A) for the placement of adhesive may be formed on at least one of the side surfaces and bottom surfaces of each of the first and second coupling grooves (105A, 105B). The grooves (4A) may increase the bonding area between the adhesive and the magnetic body support unit (64), thereby improving the bonding strength between the holder (30) and the magnetic body support unit (64).

The holder (30) may include at least one stopper (37) formed on the rear outer side surface (31c). For example, the stopper (37) may be in the form of a projection or protrusion extending from the second surface (21b) and the third surface (21c) of the rear outer side surface (31c), respectively.

The first housing (50) may be disposed within the cover member (300). For example, an adhesive or a shielding member may be disposed between the first housing (50) and the cover member (300), and the first housing (50) may be coupled to or fixed to the cover member (300). The holder (30) may be disposed within the first housing (50). The first housing (50) may accommodate the holder (30) internally and may expose the incident surface (8A) and the exit surface (8B) of the optical member (40) disposed within the holder (30).

Referring to FIGS. 9a to 9c, for example, the first housing (50) may include a first aperture (53A) (or first hole) for exposing the incident surface (8A) of the optical member (40) and a second opening (53B) (or second hole) for exposing the exit surface (8B) of the optical member (40).

The first housing (50) may include an upper portion (27A), a lower portion (27B), and a plurality of side portions (28A to 28D) disposed between the upper portion (27A) and the lower portion (27B). The upper portion (27A) and the lower portion (27B) may face each other or be positioned opposite one another in a second direction (e.g., the X-axis direction).

For example, the first housing (50) may include a first side portion (28A), a second side portion (28B), a third side portion (28C), and a fourth side portion (28D).

For example, the first side portion (28A) of the first housing (50) may be disposed to face or be opposite the lens assembly (e.g., 640) of the first actuator (310). A first opening (53A) may be formed in the upper portion (27A), and a second opening (53B) may be formed in the first side portion (28A).

The second side portion (28B) may face the first side portion (28A) in the first direction or be located on the opposite side of the first side portion (28A). The third side portion (28C) and the fourth side portion (28D) may be disposed between the first side portion (28A) and the second side portion (28B), and may face each other or be situated on opposite sides in the first direction. For example, the third side portion (28C) may connect one end of the first side portion (28A) to one end of the second side portion (28B), and the fourth side portion (28D) may connect the other end of the first side portion (28A) to the other end of the second side portion (28B).

For example, the first housing (50) may include a first hole (54A) formed in the third side portion (28C) for mounting or disposing a first OIS coil unit (230A), a second hole (54B) formed on a fourth side portion to accommodate or dispose a second OIS coil unit (230B), and a third hole (54C) formed on a lower portion (27B) to accommodate or dispose a third OIS coil unit (230C). For example, each of the first to third holes (54A to 54C) is in the form of a through-hole, but is not limited thereto; in other embodiments, they may be in the form of grooves.

Furthermore, a groove (56) (or through-hole) may be formed in the third side portion (28C) (or fourth side portion (28D)) of the first housing (50) for the placement or mounting of the second driver (260). For example, the groove (56) may be formed at a distance from the first hole (54A).

The first housing (50) may include at least one coupling projection (51) formed on at least one of the third side portion (28C) and the fourth side portion (28D). For example, the coupling projection (51) may project from the outer surface of each of the third side portion (28C) and the fourth side portion (28D). Furthermore, the first housing (50) may include at least one coupling projection (52A) formed on the first side portion (28A). For example, the coupling projection (52A) may project from the outer surface of the first side portion (28A).

Furthermore, the first housing (50) may include at least one coupling projection (52B) formed on the lower portion (28B). For example, the coupling projection (52B) may be formed so as to protrude from the outer surface of the lower portion (28B).

Guide projections (59A, 59B) for guiding the first circuit substrate (250A) may be formed on at least one of the upper and lower surfaces of the third side portion (28C) of the first housing (50). Furthermore, guide projections for guiding the second circuit substrate (250B) may be formed on at least one of the upper and lower surfaces of the fourth side portion (28D) of the first housing (50).

The second side portion (28B) of the first housing (50) may include at least two grooves (58A, 58B) corresponding to at least two rear projections (61C1, 61C2) of the mover plate (61). For example, the at least two grooves (58A, 58B) of the first housing (50) may be disposed spaced apart in a third direction.

Projections or staircases may also be formed around the at least two grooves (58A, 58B), and a lubricant may be disposed between the rear projections and the grooves (58A, 58B), and the description regarding the projection (22A) may apply or be applied mutatis mutandis.

For example, the first housing (50) may include a projection (57) projecting from the inner surface of the second side portion (28B) towards the first side portion (28A), and the projection (57) may have a first groove (58A) and a second groove (58B) corresponding to, facing, or overlapping the rear projections (61C1, 61C2) of the mover plate (61).

For example, the projection (57) may include a first portion (57A) projecting from the inner surface of the second side portion (28B) and a second portion (57B) connecting the first portion (57A) to the lower portion (27B) of the first housing (50).

The first groove (58A) and the second groove (58B) of the first housing (50) may be formed on the inner surface (or front surface) of the second portion (57B) of the projection (57).

Furthermore, a groove (44A) for disposing or seating a second magnetic body (63) may be formed on the rear surface of the projection (57).

The description of the configuration of the first and second grooves (36A, 36B) of the holder (30) may be applied or be applied mutatis mutandis to the first and second grooves (58A, 58B) of the first housing (50).

In the embodiment, by making the shape of the second groove (58B) in the first housing (50) different from that of the first groove (58A), the coupling margin between the rear projections (61C1, 61C2) of the mover plate (61) and the first and second grooves (58A, 58B) of the first housing (50) can be increased. In other words, even if manufacturing tolerances arise in the rear projections of the mover plate (61) and the first and second grooves of the first housing, the second groove (58B) ensures that the rear projections (61C1, 61C2) of the mover plate (61) can be fitted appropriately or securely into the first and second grooves (58A, 58B) of the first housing (50), thereby enabling stable OIS operation.

In FIG. 9b, when viewed from the front, the first groove (58A) is located on the left and the second groove (58B) on the right; however, this is not limited thereto, and in other embodiments, the first groove (58A) may be located on the right and the second groove (58B) on the left.

For example, an opening (55) may be formed in the second side portion (28B) of the first housing (50) for the placement of a magnetic body support unit (64).

Furthermore, at least one through-hole may be formed in the second side portion (28B) of the first housing (50). For example, a first through-hole (55A) and a second through-hole (55B) may be formed in the second side portion (28B) of the first housing (50).

As shown in FIG. 9c, when viewed from the rear of the first housing (50), the first through-hole (55A) may be located on one side (e.g., the right side) of the protrusion (57) of the first housing (50), and the second through-hole (55B) may be located on the other side (e.g., the left side) of the protrusion (57).

Next, the support unit (60) will be described.

The support unit (60) may be disposed between the holder (30) and the first housing (50), and may support the holder (30) relative to the first housing (50).

The support unit (60) may include a mover plate (61) disposed between the holder (30) and the first housing (50).

The mover plate (61) may include at least two front projections (61B1, 61B2) that are coupled with the holder (30) and at least two rear projections (61C1, 61C2) that are coupled with the first housing (50).

For example, at least two front projections (61B1, 61B2) may be arranged in a spaced-apart manner in a second direction. Each of the front projections (61B1, 61B2) may be disposed in one of any corresponding first and second grooves (36A, 36B) of the holder (30).

For example, at least two rear projections (61C1, 61C2) may be arranged in a spaced-apart manner in a third direction. Each of the rear projections (61C1, 61C2) may be disposed in one of any corresponding first and second grooves (58A, 58B) of the first housing (50).

For example, the mover plate (61) may include a body (61A) disposed within a groove (106) of the holder (30), front projections (61B1, 61B2) projecting from the front surface of the body (61A), and rear projections (61C1, 61C2) projecting from the rear surface of the body (61A). For example, the front projections (61B1, 61B2) and the rear projections (61C1, 61C2) may project in opposite directions.

For example, each of the front projections (61B1, 61B2) may have a curved surface shape, a hemispherical shape, a dome shape, or a polyhedral shape, but is not limited thereto. Furthermore, for example, each of the rear projections (61C1, 61C2) may have a curved surface shape, a hemispherical shape, a domed shape, or a polyhedral shape, but is not limited thereto.

In another embodiment, front grooves may be formed on the front surface of the mover plate instead of the front projections, and a rear groove may be formed on the rear surface of the mover plate instead of the rear projection. Furthermore, the holder may be formed with protrusions for engaging with the front grooves of the mover plate instead of the first and second grooves (36A, 36B), and the first housing may be formed with protrusions for engaging with the rear grooves of the mover plate instead of the first and second holes (58A, 58B).

For example, the mover plate (61) may be made of an injection-molded material such as plastic or resin. In another embodiment, the mover plate (61) may be made of a metal, such as SUS. Furthermore, the mover plate (61) may be non-magnetic. In another embodiment, the mover plate may be magnetic.

The support unit (60) may further include a first magnetic body (62) coupled to the holder (30) and a second magnetic body (63) coupled to the first housing (40).

The support unit (60) may further include a magnetic body support unit (64) on which a first magnetic body (62) is mounted and which is coupled to the holder (30). For example, the magnetic body support unit (64) may be coupled to the holder (30) by passing through at least a portion of the first housing (40).

Referring to FIGS. 7 to 10, the magnetic body support unit (64) may include a body (93) on which the first magnetic body (62) is disposed, a first extension unit (94a) extending from one side of the body (93) and passing through the first through-hole (55A) of the first housing (50) to engage with the first coupling groove (105A) of the holder (30); and a second extension unit (94b) extending from the other side of the body (93), passing through a second through-hole (55B) in the first housing (50), and engaging with a second coupling groove (105B) of the holder (30).

A groove (64a) may be formed on the front surface of the body (93) of the magnetic body support unit (64) for the first magnetic body (62) to be seated or disposed therein. For example, the first magnetic body (62) may be coupled to the groove (64a) of the magnetic body support unit (64) by means of an adhesive. Furthermore, for example, the extension units (94a, 94b) of the magnetic body support unit (64) may be coupled to the coupling grooves (105A, 105B) of the holder (30) by means of an adhesive.

The second magnetic body (63) may be disposed on the second side portion (28B) of the first housing (50). For example, the second magnetic body (63) may be disposed on the projection (57) of the first housing (50). For example, the second magnetic body (63) may be disposed within a groove (44A) of the projection (57) of the first housing (50). For example, the second magnetic body (63) may be coupled to the groove (44A) of the first housing (50) by means of an adhesive.

Referring to FIGS. 11a and 11b, the first magnet body (62) and the second magnet body (63) may be disposed to face each other or to overlap in a first direction.

The second magnet body (63) may be disposed between the first magnet body (62) and the mover plate (61). In the embodiment, as the mover plate (61) is not positioned between the first magnetic body (62) and the second magnetic body (63), and instead, both the first magnetic body (62) and the second magnetic body (64) are disposed on one side of the mover plate (61) relative to the mover plate (61), the distance between the first magnetic body (62) and the second magnetic body (63) can be reduced, thereby increasing the magnetic force (e.g., repulsive force) between the first magnetic body (62) and the second magnetic body (63).

Due to the repulsive force between the first and second magnetic bodies (62, 63), the mover plate (61) can be pressed against the holder (30) and/or the first housing (50) and can be brought into close contact with the holder (30) and/or the first housing (50). In the embodiment, because the magnetic force (e.g., repulsive force) between the first magnetic body (62) and the second magnetic body (63) is large, the mover plate (61) can stably support the holder (30), thereby enabling stable OIS operation.

Referring to FIG. 11a, the length of the first magnetic body (62) in the second direction may be greater than the length of the second magnetic body (63) in the second direction. Furthermore, referring to FIG. 11b, the length of the first magnetic body (62) in the third direction may be greater than the length of the second magnetic body (63) in the third direction. In another embodiment, the length of the first magnetic body (62) in the second direction may be equal to or less than the length of the second magnetic body (63) in the second direction, and the length of the first magnetic body (62) in the third direction may be equal to or less than the length of the second magnetic body (63) in the third direction.

For example, the area of the first surface of the first magnetic body (62) facing the second magnetic body (63) may be greater than the area of the first surface of the second magnetic body (63) facing the first magnetic body (62). In another embodiment, the area of the first surface of the first magnetic body may be equal to or smaller than the area of the first surface of the second magnetic body.

A repulsive force may act between the first magnetic body (62) and the second magnetic body (63). The first magnetic body (62) may include a first magnet, and the second magnetic body (63) may include a second magnet with which the first magnet exerts a repulsive force. Furthermore, for example, the first magnetic body (62) may further include a first yoke corresponding to the first magnet and disposed within a groove (64a). For example, the second magnetic body (63) may further include a second yoke corresponding to the second magnet and disposed within the groove (44A) of the first housing (50), and the first yoke and the second yoke may increase the magnetic force (e.g., repulsive force) acting between the first magnetic body (62) and the second magnetic body (63).

For example, the facing surfaces of the first magnetic body (62) and the second magnetic body (63) may have the same polarity (N-pole or S-pole).

In another embodiment, an attractive force may act between the first magnetic body and the second magnetic body; in this case, the facing surfaces of the first magnetic body and the second magnetic body may have opposite polarities.

Next, the second drive unit (70) will be described.

The second drive unit (70) tilts the holder (30) in a second direction or a third direction, or rotates it by a predetermined angle.

The second drive unit (70) may include an OIS magnet (31), an OIS coil (230), an OIS position sensor unit (240), and a first substrate unit (250).

The OIS magnets (31) may be disposed within the holder (30). For example, the OIS magnets (31) may include first OIS magnets (31A, 31B) and a second OIS magnet (32).

For example, the first OIS magnet may include a first magnet unit (31A) disposed on a first side portion (31c) of the holder (30) and a second magnet unit (31B) disposed on a second side portion (31d) of the holder (30). For example, the first magnet unit (31A) may face or overlap the second magnet unit (31B) in a third direction. For example, the first magnet unit (31A) may be disposed within a first receiving groove (16A) on the first side portion (31c) of the holder (30), and the second magnet unit (31B) may be disposed within a first receiving groove (16A) on the second side portion (31d) of the holder (30).

The second OIS magnet may include a third magnet unit (32) disposed on the lower surface (17) of the holder (30). The third magnet unit (32) may be disposed within a second receiving groove (16B) of the holder (30).

Each of the first to third magnet units (31A, 31B, 32) may be a unipolar magnet having one N-pole and one S-pole, but is not limited thereto; in other embodiments, they may be bipolar magnets having two N-poles and two S-poles. In a further embodiment, at least one of the first to third magnet units (31A, 31B, 32) may be a single-pole magnet, while the remainder may be bipolar magnets.

The OIS coil (230) may be disposed in the first housing (50) in correspondence with or opposite the OIS magnet (31). For example, the OIS coil (230) may include a first OIS coil (230A, 230B) that corresponds to, faces, or overlaps the first OIS magnet (31A, 31B) in a third direction, and a second OIS coil (230C) corresponding to, facing, or overlapping the second OIS magnet (32) in a second direction.

For example, the first OIS coil may include a first OIS coil unit (230A) that corresponds to, faces, or overlaps with the first magnet unit (31A) in a third direction, and a second OIS coil unit (230B) that corresponds to, opposite, or overlapping with the second magnet unit (31B) in the third direction. For example, the second OIS coil may include a third OIS coil unit (230C) that corresponds to, is opposite to, or overlaps with the third magnet unit (32) in the second direction.

For example, the first OIS coil unit (230A) may be disposed in a third side portion (28C) of the first housing (50) (e.g., a first hole (34A)), and the second OIS coil unit (230B) may be disposed in a fourth side portion (28D) (e.g., the second hole (54B)), and the third OIS coil unit (230C) may be disposed at the lower surface (28B) of the first housing (50) (e.g., the third hole (54C)).

For example, the first OIS coil unit (230A) may have a closed-curve or ring shape including a hollow or hole. The first OIS coil unit (230A) may be implemented as a coil ring wound in a clockwise or counter-clockwise direction relative to a third axis parallel to the third direction.

The second OIS coil unit (230B) may have a closed-loop or ring shape including a hollow or hole. The second OIS coil unit (230B) may be implemented as a coil ring wound clockwise or counter-clockwise relative to a third axis parallel to the third direction.

The third OIS coil unit (230C) may have a closed-loop or ring shape including a hollow or hole. The third OIS coil unit (230C) may be implemented as a coil ring wound in a clockwise or counter-clockwise direction relative to a second axis parallel to the second direction.

Referring to FIG. 10b, a first electromagnetic force (F21, F22, F31, F32) may be generated by the interaction between the first OIS magnets (31A, 31B) and the first OIS coils (230A, 230B). That is, the first electromagnetic force may be generated by the interaction between the first magnet unit (31A) and the first OIS coil unit (230A), and by the interaction between the second magnet unit (31B) and the second OIS coil unit (230B). For example, a first-1 electromagnetic force (F22, F32) may be generated by the interaction between the first magnet unit (31A) and the first OIS coil unit (230A), and a first-2 electromagnetic force (F21, F31) may be generated by the interaction between the second magnet unit (31B) and the second OIS coil unit (230B); the first electromagnetic force may include the first-1 electromagnetic force (F22, F32) and the first-2 electromagnetic force (F21, F31).

Furthermore, a second electromagnetic force (F1, F2) may be generated by the interaction between the second OIS magnet (32) and the third OIS coil unit (230C).

Due to the first electromagnetic forces (F21, F22, F31, F32), the OIS moving unit (e.g., the holder (30)) may be tilted about the second axis (e.g., the X-axis). Here, tilting about the second axis (X-axis) means that the OIS moving unit tilts relative to the second axis (X-axis), or that the OIS moving unit rotates by a predetermined angle with the second axis (X-axis) as the axis of rotation.

Due to the second electromagnetic forces (F1, F2), the OIS moving unit may be tilted about the third axis (e.g., the Y-axis). Here, tilting about the third axis (Y-axis) means that the OIS moving unit tilts relative to the third axis, or rotates by a predetermined angle with the third axis as the axis of rotation.

In this case, the OIS moving unit may include a holder (30). Alternatively, the OIS moving unit may further include components coupled to or mounted on the holder (30), such as OIS magnets (31A, 31B, 32), a yoke (33), and a magnetic body support unit (64). Furthermore, the OIS moving unit may further include at least one of a mover plate (61) and a first magnetic body (62).

Furthermore, the first OIS coil unit (230A) and the second OIS coil unit (230B) may overlap in a third direction (the Y-axis direction), and the first OIS magnet (31A) and the second OIS magnet (31B) may overlap in the third direction. Through this arrangement, electromagnetic forces are applied in a balanced manner to the first side portion (31c) and the fourth side portion (31d) of the holder (30), thereby enabling accurate and precise X-axis tilting.

In another embodiment, the OIS moving unit (e.g., the holder (30)) may be tilted about a third axis (e.g., the Y-axis) by an electromagnetic force resulting from the interaction between the first OIS magnet (31A, 31B) and the first OIS coil (230A, 230B), and the OIS moving unit (e.g., the holder (30)) may also be tilted about a second axis (e.g., the X-axis) by an electromagnetic force resulting from the interaction between the second OIS magnet (32) and the third OIS coil unit (230C).

The camera device (200) may further comprise yokes (33: 33A, 33B, 33C) disposed on the OIS magnets (31, 32). For example, the yoke (33) may include a first yoke (33A) disposed on the first magnet unit (31A), a second yoke (33B) disposed on the second magnet unit (31B), and a third yoke (33C) disposed on the third magnet unit (32).

For example, the first yoke (33A) may be disposed within a first receiving groove (16A) of a first side portion (31c) of the holder (30). For example, the first yoke (33A) may be disposed further inwards than the first magnet unit (31A). The second yoke (33B) may be disposed within the first receiving groove (16A) of the second side portion (31d) of the holder (30). For example, the second yoke (33B) may be disposed further inwards than the second magnet unit (31B). The third yoke (33C) may be disposed within the second receiving groove (16B) of the holder (30).

The third yoke (33C) may be disposed more inwardly than the third magnet unit (32). The first yoke (33A) and the second yoke (33B) may increase the first electromagnetic force, and the third yoke (33C) may increase the second electromagnetic force.

For example, a groove (35a) may be formed in at least one of the first to third yokes (33A to 33C) (for example, the third yoke (33C)), and a projection (35b) corresponding to the groove (35a) may be formed in at least one of the receiving grooves (16A, 16B) of the holder (30) (see FIG. 6c). The groove (35a) and the projection (35b) may improve the coupling force between the yoke (33) and the holder (30).

A first substrate unit (250) may be disposed within the first housing (50). For example, the first substrate unit (250) may be coupled to the first housing (50). The first substrate unit (250) may be electrically connected to the OIS coil (230) and may supply a drive signal to the OIS coil (230).

For example, the first OIS coil unit (230A) and the second OIS coil unit (230B) may be connected in series, and the first substrate unit (250) may supply a first drive signal to the first and second OIS coil units (230A, 230B) connected in series. Furthermore, the first substrate unit (250) may supply a second drive signal to the third OIS coil unit (230C). The first substrate unit (250) may include a first circuit substrate (250A) disposed on a third side portion (28C) of the first housing (50), a second circuit substrate (250B) disposed on a fourth side portion (28D) of the first housing (50), and a third circuit substrate (250C) disposed on the lower surface (27B) of the first housing (50).

In FIG. 5, the first circuit substrate (250A) appears to be spaced apart from the third circuit substrate (250C); however, the first to third circuit substrates (250A to 250C) may form a single integral substrate and may be electrically connected to one another. In another embodiment, at least one of the first to third circuit substrates may not be integral with the others, and may be electrically connected to the others.

The first circuit substrate (250A) may be formed with a hole (251A) for engaging with a coupling projection (51) on the third side portion (28C) of the first housing (50). Furthermore, the first circuit substrate (250A) may include a plurality of terminals (251).

The first OIS coil unit (230A) may be disposed or mounted on a first surface of the first circuit substrate (250A), and the plurality of terminals (251) may be disposed on a second surface of the first circuit substrate (250A). The first surface of the first circuit substrate (250A) may be the surface facing the outer surface of the third side portion (28C) of the first housing (50). The second surface of the first circuit substrate (250A) may be the surface opposite the first surface of the first circuit substrate (250A).

The first substrate unit (250) may include a bent portion connecting between the second circuit substrate (250B) and the third circuit substrate (250C), and between the first circuit substrate (250A) and the third circuit substrate (250C).

The second circuit substrate (250B) may have a hole (251B) formed therein for engaging with the coupling protrusion (51) on the fourth side portion (28D) of the first housing (50). The third circuit substrate (250C) may have a hole (251C) formed therein for engaging with a coupling protrusion (52B) on the lower surface (28B) of the first housing (50).

The second OIS coil unit (230B) may be disposed or mounted on the first surface of the second circuit substrate (250B). The first surface of the second circuit substrate (250B) may be the surface facing the outer surface of the fourth side portion (28C) of the first housing (50).

The third OIS coil unit (230C) may be disposed or mounted on the first surface of the third circuit substrate (250C). The first surface of the third circuit substrate (250C) may be the surface facing the outer surface of the lower surface (28B) of the first housing (50).

The first substrate unit (250) may include at least one of a rigid printed circuit board (Rigid PCB), a flexible printed circuit board (Flexible PCB), or a rigid-flexible printed circuit board (Rigid-Flexible PCB). Furthermore, the first substrate unit (250) may include wiring patterns for electrically connecting components disposed on the first to third circuit substrates (250A, 250B, 250C) to a plurality of terminals (251).

The camera device (200) may further include a gyro sensor (82) disposed on the first substrate unit (250). For example, the gyro sensor (82) may be a 2-axis, 3-axis, or 5-axis gyro sensor or an angular velocity sensor.

The camera device (200) may further comprise a second driver (260) disposed on a first substrate unit (250). For example, the second driver (260) may be disposed or mounted on a first circuit substrate (250A). For example, the second driver (260) may be disposed within the first housing (50). For example, the second driver (260) may be disposed or mounted on a first surface of the first circuit substrate (250A) within the first housing (50).

The second driver (260) may be electrically connected to the first OIS coils (230A, 230B) and the second OIS coil (230C). Furthermore, the second driver (260) may be electrically connected to the first OIS position sensors (240A, 240B) and the second OIS position sensor (240C).

For example, the second driver (260) may provide drive signals to the first OIS position sensors (240A, 240B) and the second OIS position sensor (240C) respectively, and may receive the first output signal from the first OIS position sensors (240A, 240B) and the second output signal from the second OIS position sensor (240C).

Furthermore, for example, the second driver (260) can supply a first drive signal (e.g., drive current or drive voltage) to the first OIS coils (230A, 230B), and can perform feedback control of the first drive signal using the first output signal from the first OIS position sensors (240A, 240B).

Furthermore, for example, the second driver (260) may supply a second drive signal (e.g., a drive current or drive voltage) to the second OIS coil (230C), and may perform feedback control of the second drive signal using the second output signal from the second OIS position sensor (240C). For example, the second driver (260) may be referred to as the "OIS driver", "second driver IC", or "OIS control unit".

Furthermore, the camera device (200) may further comprise a cover plate (50A) disposed on the second side portion (28B) of the first housing (50) and covering the opening (55) of the first housing (50). The cover plate (50A) may be coupled to or attached to the outer surface of the second side portion (28B) of the first housing (50) and may prevent foreign matter from entering the first housing (50).

The OIS position sensor unit (240) detects the position of the OIS moving unit in a second direction and/or a third direction in response to the movement of the OIS moving unit, and outputs an output signal based on the detection results.

The OIS position sensor unit (240) may be referred to as the "second position sensor unit".

The OIS position sensor unit (240) may include a plurality of position sensors.

For example, the OIS position sensor unit (240) may include a first OIS position sensor (240A, 240B) and a second OIS position sensor (240C).

The first OIS position sensor (240A, 240B) can detect the displacement (or tilt, or amount of tilt) of the OIS (e.g., optical member (40)) relative to a second axis (e.g., the X-axis). Furthermore, for example, the second OIS position sensor (240C) can detect the displacement (or tilt, or amount of tilt) of the OIS moving unit (e.g., optical member (40)) relative to a third axis (e.g., the Y-axis).

At least some of the first OIS position sensors (240A, 240B) may correspond to, face, or overlap the first OIS magnet (31) in a third direction, and may detect the strength of the magnetic field of the first OIS magnet (31).

For example, the first OIS position sensor may include a first sensor (240A) disposed or mounted on a first circuit substrate (250A) and a second sensor (240B) disposed or mounted on a second substrate (250-1) of the second circuit substrate (240B). For example, the first sensor (240A) may be disposed within the hollow (or hole) of the first OIS coil unit (230A), and the second sensor (240B) may be disposed within the hollow (or hole) of the second OIS coil unit (230B).

For example, the first sensor (240A) and the second sensor (240B) may each be a Hall sensor including first and second input terminals and first and second output terminals.

The first and second input terminals of the first sensor (240A) and the first and second input terminals of the second sensor (240B) may be connected in parallel, and the second driver (260) may supply a drive signal or power to the parallel-connected first and second input terminals of first and second sensors (240A, 240B).

The first and second output terminals of the first sensor (240A) and the first and second output terminals of the second sensor (240B) may be connected in series, and a first output signal may be output from both ends of the series-connected first and second output terminals of the first and second sensors (240A, 240B), the first output signal may be transmitted to the second driver (260).

At least a portion of the second OIS position sensor (240C) may correspond to, face, or overlap the second OIS magnet (32) in a second direction, and may detect the intensity of the magnetic field of the second OIS magnet (32).

For example, the second OIS position sensor (240C) may include a third sensor (240C1) and a fourth sensor (240C2) disposed or mounted on a third circuit substrate (250C). The third sensor (240C1) and the fourth sensor (240C2) may face or overlap the third OIS magnet (32) in the second direction. For example, the third sensor (240C1) and the fourth sensor (240C2) may be disposed so as to be spaced apart from each other in the third direction. For example, the third sensor (240C1) and the fourth sensor (240C2) may be disposed within a hollow (or hole) of the third OIS coil unit (230C).

For example, the third sensor (240C1) and the fourth sensor (240C2) may each be Hall sensors including first and second input terminals and first and second output terminals.

The first and second input terminals of the third sensor (240C1) and the first and second input terminals of the fourth sensor (240B) may be connected in parallel, and the second driver (260) may supply a drive signal or power to the parallel-connected first and second input terminals of the third and fourth sensors (240C1, 240C2).

The first and second output terminals of the third sensor (240C1) and the first and second output terminals of the fourth sensor (240C2) may be connected in series, a second output signal may be output from both ends of the series-connected first and second output terminals of the third and fourth sensors (240C1, 240C2), and the second output signal may be transmitted to the second driver (260).

The descriptions of the first and second sensors (71A, 71B) and the first circuit substrate (192) set out below, or the descriptions of the third and fourth sensors (72A, 72B) and the second circuit substrate (194), may be applied or analogously applied to the first and second sensors (240A, 240B), the third and fourth sensors (240C1, 240C2) and the first substrate unit (250) in FIG. 5.

In other embodiments, the output terminals of each of the first and second sensors may be unconnected and independent of one another, and may output independent output signals. Furthermore, the output terminals of each of the third and fourth sensors may be unconnected and independent of one another, and may output independent output signals.

In still another embodiment, the first OIS position sensor may include a single position sensor (e.g., a Hall sensor or a driver IC including a Hall sensor), and the second OIS position sensor may also include a single position sensor (e.g., a Hall sensor or a driver IC including a Hall sensor).

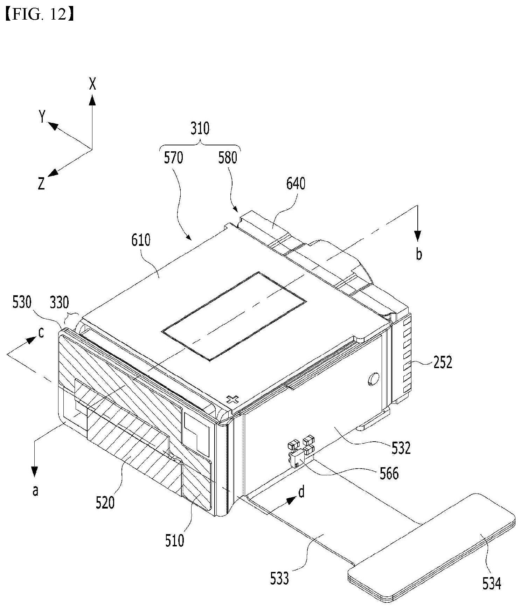

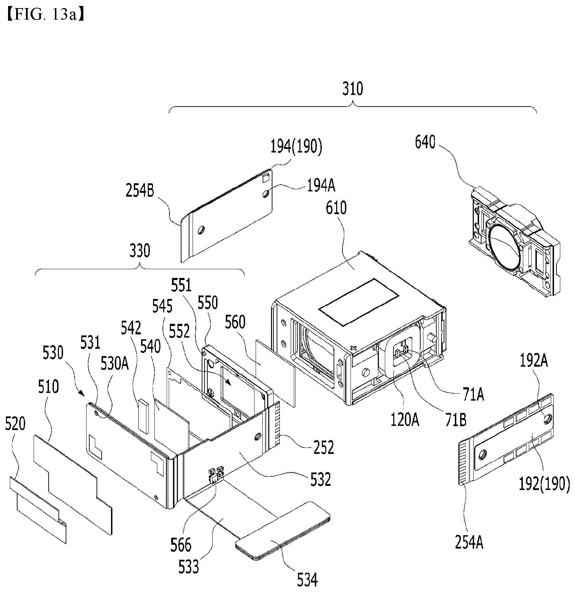

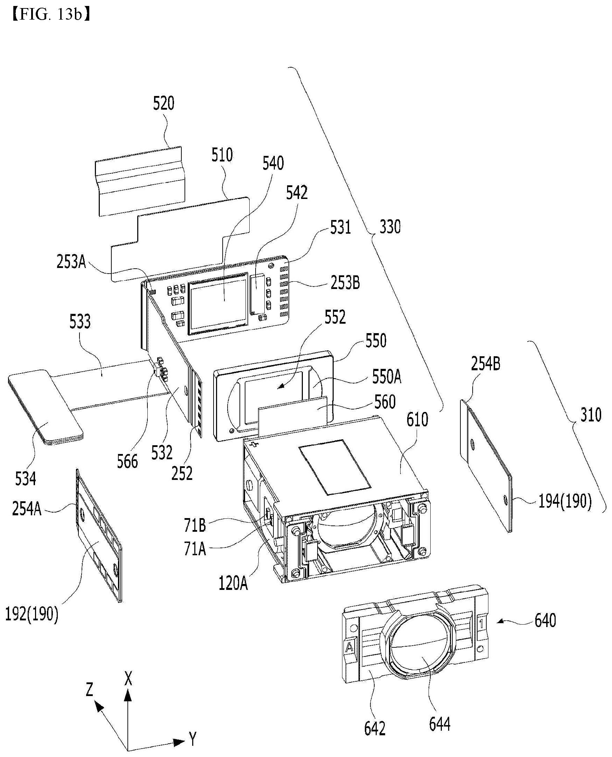

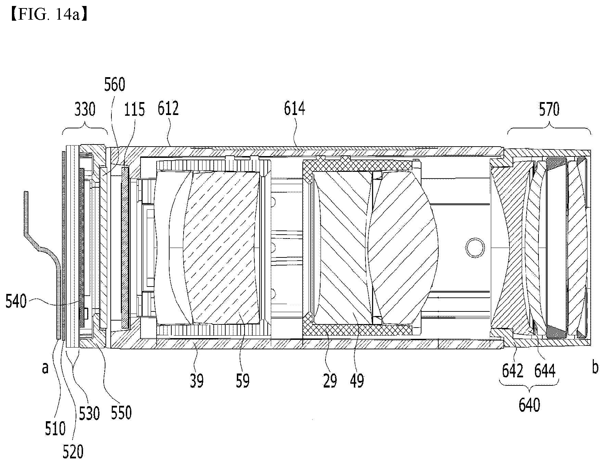

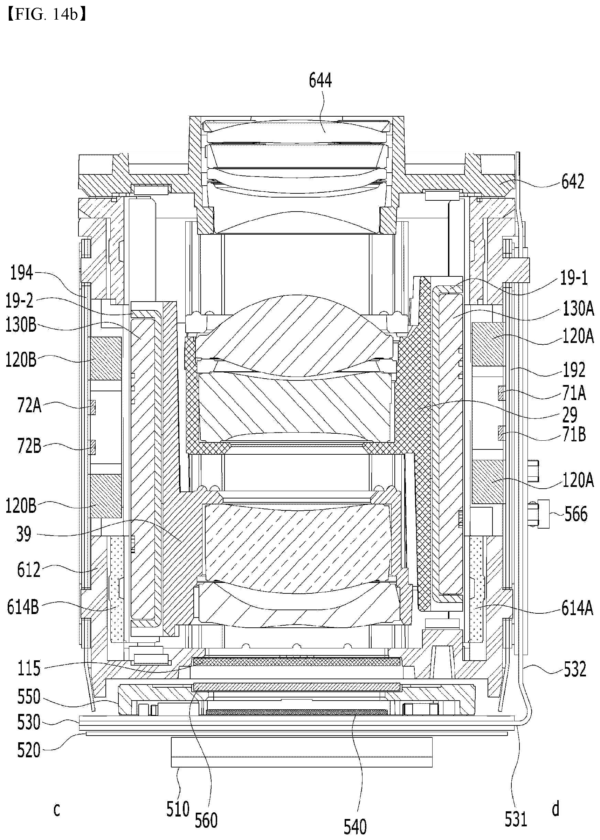

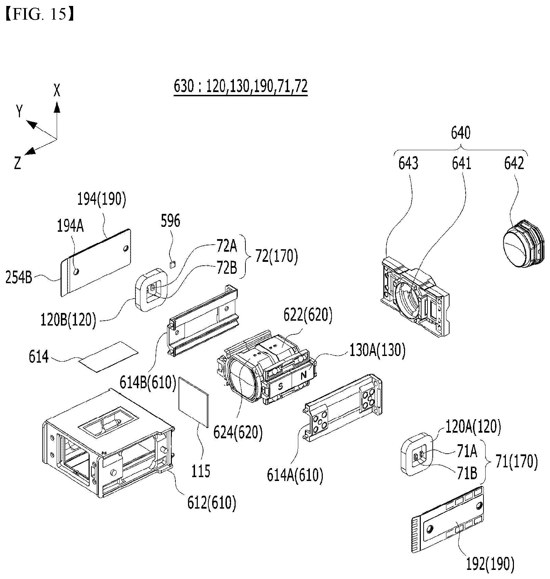

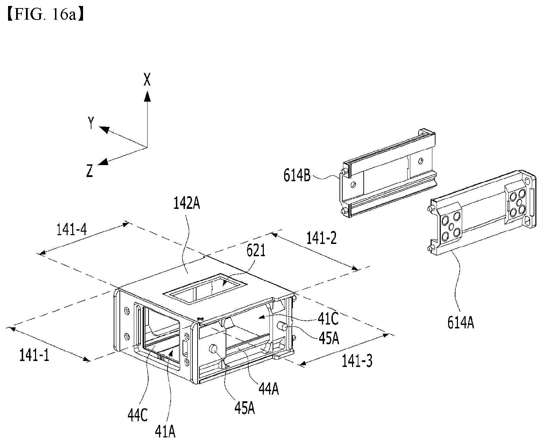

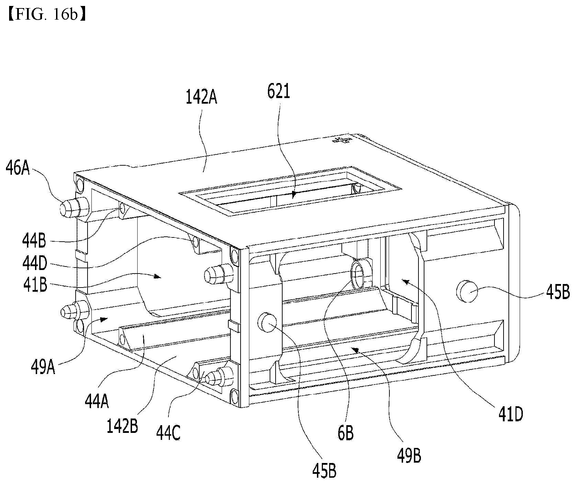

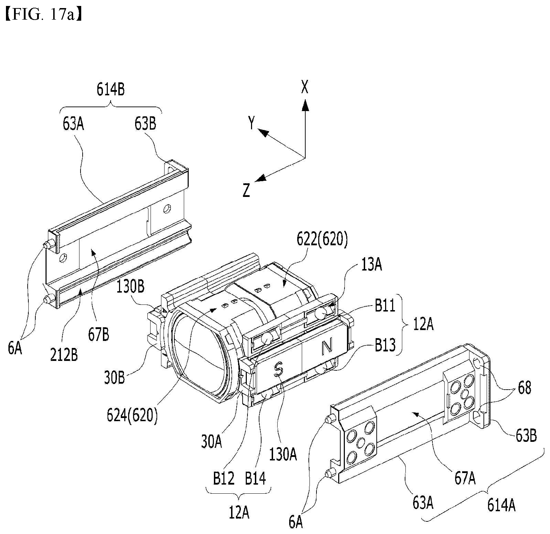

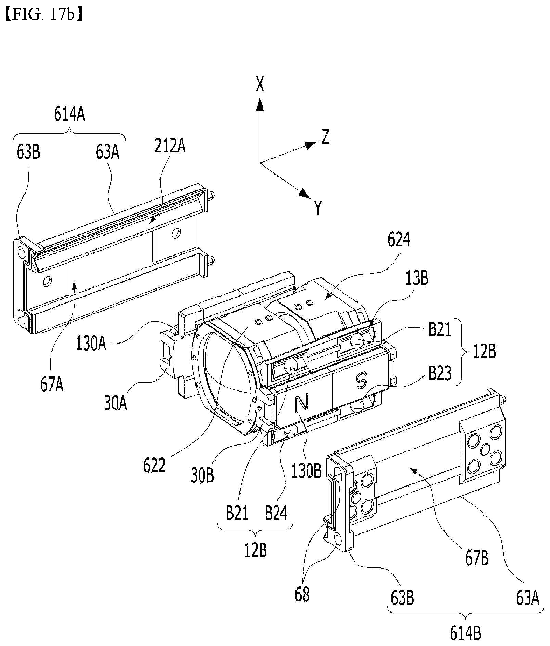

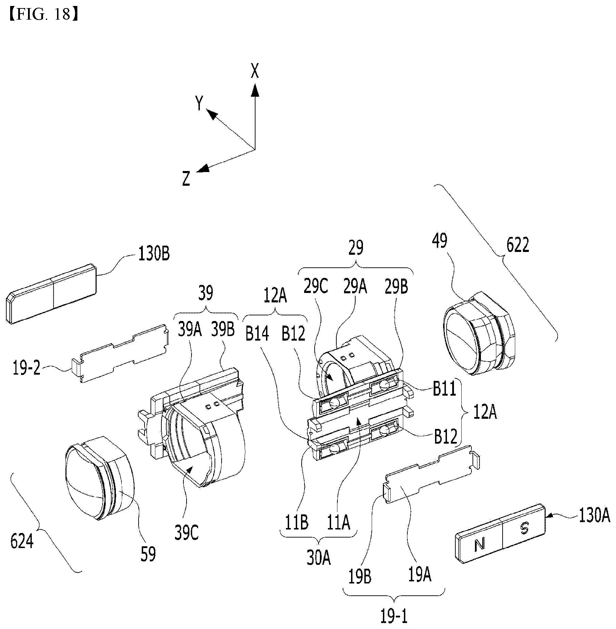

FIG. 12 is a perspective view of the first actuator (310) and the image sensing unit (330) according to an embodiment, FIG. 13a is a first exploded perspective view of the first actuator (310) and the image sensing unit (330) shown in FIG. 12, and FIG. 13b is a second exploded perspective view of the first actuator (310) and the image sensing unit (330) shown in FIG. 12, and FIG. 14a is a cross-sectional view along the ab line of the first actuator (310) and the image sensing unit (330) shown in FIG. 12, FIG. 14b is a cross-sectional view along the cd line of the first actuator (310) and the image sensing unit (330) shown in FIG. 12; FIG. 15 is an exploded perspective view of the first actuator (310); FIG. 16a is an exploded perspective view of the second housing (610); FIG. 16b is an exploded perspective view of the body (612) of the second housing (610); FIG. 17a is a first perspective view of the first and second guide units (614A, 614B) and the lens unit (620); FIG. 17b is a second perspective view of the first and second guide units (614A, 614B) and the lens unit (620); and FIG. 18 is a perspective view showing the first and second magnets (130A, 130B) and the lens unit (620).

Referring to FIGS. 12 to 18, the first actuator (310) may include a second housing (610), a lens unit (620) disposed within the second housing (610), and a first drive unit (630) for moving the lens unit (620) in a first direction (e.g., the optical axis direction or the Z-axis direction).

The lens unit (620) may be referred to as a 'lens assembly'. For example, the lens unit (620) may include a plurality of lens assemblies.

In FIGS. 12 to 18, the lens unit (620) includes two lens assemblies (622, 624), but is not limited thereto. For example, the second lens assembly (622) and the third lens assembly (624) may be arranged in a first direction.

The first actuator (310) may further include a first lens assembly (640) disposed between the lens unit (620) and the second actuator (320). For example, the first lens assembly (640) may be a fixed lens assembly whose position is fixed and does not move in the optical axis direction.

The first lens assembly (640) may include a first lens array (642) (or a first lens group). For example, the first lens assembly (640) may further comprise a lens barrel (641) coupled to the first lens array (642). Furthermore, the first lens assembly (640) may further include a third housing (643) coupled to the lens barrel (641). The third housing (643) may be disposed between the second housing (610) and the first housing (50), and may be coupled to at least one of the second housing (610) and the first housing (50).

For example, at least one first coupling hole (643A) may be formed on the front surface of the third housing (643) for coupling with at least one coupling protrusion (46A) of the second housing (610). Furthermore, a second coupling hole may be formed on the rear surface of the third housing (643) for coupling with at least one coupling protrusion (52A) of the first housing (50).

The first lens assembly (640) is illustrated as being included within the first actuator (310), but is not limited thereto and may also be illustrated as not being included within the first actuator (310). In other embodiments, the first lens assembly (640) may be omitted.

Furthermore, in other embodiments, any one of 640, 622, 624 may be expressed as the "first lens assembly", another of 640, 622, 624 may be expressed as the "second lens assembly", and the remaining one of 640, 622, 624 may be expressed as the "third lens assembly".

For example, in an embodiment, the first lens assembly (640) may be a fixed lens group. For example, the second lens assembly (622) and the third lens assembly (624) may be movable lens groups.

For example, the first lens assembly (640) may function as a focator, forming an image of parallel light at a specific location. Furthermore, the second lens assembly (622) may function as a variator, re-forming the image produced by the focator-the first lens assembly (640)-at a different location. Meanwhile, in the second lens assembly (622), the distance to the subject or the image distance may vary significantly, resulting in substantial changes in magnification; the second lens assembly (622), acting as a variator, can play a crucial role in the focal length or magnification changes of the optical system. Furthermore, the focal point formed by the second lens assembly (6220), which acts as a variator, may vary slightly depending on its position.

Furthermore, the third lens assembly (624) may perform a position compensation function for the image formed by the variator. For example, the third lens assembly (624) may perform the function of a compensator, serving to precisely form the image point formed by the variator, the second lens assembly (622), onto the pixels of the image sensor (540).

For example, the second lens assembly (622) may be a zoom lens assembly that performs a zooming function, and the third lens assembly (624) may be a focus lens assembly that performs a focusing function.

Referring to FIGS. 16a and 16b, the second housing (610) may be disposed between the first housing (50) and the image sensor unit (330) (e.g., the sensor base (550)). The second housing (610) may also be expressed by terms such as 'base' or 'holder'.

The second housing (610) may be disposed within the cover member (300) and may have a polyhedral (e.g., cuboid) shape with an internal space to accommodate the lens unit (620) and the first drive unit (630).

For example, the second housing (610) may include a body (612) comprising an upper portion (142A) (or upper plate), a lower portion (142B) (or lower plate), and a plurality of side portions (141-1 to 141-4) disposed between the upper portion (142A) and the lower portion (142B). The upper portion (142A) of the second housing (610) may face the upper plate (301) of the cover member (300), and the side portions (141-1 to 141-4) may face the side plate (302) of the cover member (300).

The side portions (141-1 to 141-4) may also be referred to as 'side plates' or 'side walls'. For example, the first side portion (141-1) and the second side portion (141-2) may face each other or be disposed opposite each other in a first direction, and the third side portion (141-3) and the fourth side portion (141-4) may face each other or be positioned opposite each other in a third direction.

A first opening (41A) (or a first hole) may be formed on the first side portion (141-1) of the second housing (610) to expose one end of the lens unit (620), and a second opening (41B) (or a second hole) may be formed on the second side portion (141-2) of the second housing (610) to expose the other end of the lens unit (620).

Furthermore, a third opening (41C) (or third hole) may be formed on the third side portion (141-3) of the second housing (610) for the placement or mounting of the first coil (120A), a fourth opening (41C) (or third hole) may be formed on the fourth side portion (141-4) of the second housing (610) for the placement or mounting of the second coil (120B). Each of the third and fourth openings (41C, 41D) may be in the form of through-holes, but is not limited thereto and may also be in the form of grooves.

At least one first coupling protrusion (45A) for engaging with the first circuit board (192) of the second substrate section (190) may be formed on the third side (141-3) of the second housing (610). For example, at least one first coupling protrusion (45A) may project from the outer surface of the third side portion (141-3).

At least one second coupling protrusion (45B) may be formed on the fourth side portion (141-1) of the second housing (610) to engage with the second circuit substrate (194) of the second substrate unit (190). For example, at least one second coupling protrusion (45B) may protrude from the outer surface of the fourth side portion (141-4). Furthermore, at least one third coupling protrusion (46A) may be formed on the second side portion (141-2) of the second housing (610).

The second housing (610) may include a first guide unit (614A) and a second guide unit (614B). The first guide unit (614A) may support and guide the second lens assembly (622) when the lens unit (620) moves during a zooming operation. The second guide unit (614B) may support and guide the third lens assembly (624) when the lens unit (620) moves due to a zooming operation.

The first guide unit (614A) may be disposed between the lens unit (620) and the third side portion (141-3), and the second guide unit (614B) may be disposed between the lens unit (620) and the fourth side portion (141-4).

For example, the first guide unit (614A) may be coupled to the third side portion (141-3) of the second housing (610), and the second guide unit (614B) may be coupled to the fourth side portion (141-4) of the second housing (610).

Referring to FIGS. 17a and 17b, the first guide unit (614A) may include at least one first guide groove (212A). The second guide unit (614B) may include at least one second guide groove (212B). Here, the term 'guide groove' may be replaced by 'rail' or 'groove'.

For example, the first guide unit (614A) and the second guide unit (614B) may each include a body (63A) and a protrusion (63B) extended from and protruding from the body (63A).

For example, the first guide groove (212A) may be formed on the inner surface of the body (63A) of the first guide unit (614A), and the second guide groove (212B) may be formed on the inner surface of the body (63A) of the second guide unit (614B). In this case, the inner surfaces of the bodies (63A) of the first and second guide units (614A, 614B) may be surfaces facing the lens unit (620).

In FIGS. 17a and 17b, a single first guide groove (212A) is formed on the lower side of the inner surface of the body (63A) of the first guide unit (614A), and a single second guide groove (212B) is formed on the upper side of the inner surface of the body (63A) of the second guide unit (614B), but this is not limited thereto. In other embodiments, a guide groove may be formed on at least one of the upper and lower sides of the inner surface of the body of each of the first and second guide grooves.

Each of the first and second guide grooves (212A, 212B) may be formed continuously from the front end to the rear end of the inner surface of the body (64A).

The protrusions (63B) of the first guide unit (614A) and the second guide unit (614B) may each extend and protrude in a direction perpendicular (e.g., the third direction) to the direction in which the first and second guide grooves extend (e.g., the first direction). For example, the protrusions (63B) of the first guide unit (614A) and the second guide unit (614B) may protrude in opposite directions.

For example, the protrusions (63B) may be formed on the rear surface or rear end of each of the first guide unit (614A) and the second guide unit (614B).

At least one hole (68) may be formed in each of the protrusions (63B) of the first and second guide units (614A, 614B) for engagement with the rear end of the body (612) of the second housing (610). For example, the hole (68) in the protrusion (63B) may engage with the coupling lug (46A) of the body (612) of the second housing (610). For example, the coupling lug (46A) may pass through the hole (68) in the protrusion (63B) and be coupled to the first coupling hole (643A) of the third housing (643).

At least one coupling lug (6A) that engages with the body (612) of the second housing (610) may be formed on the front surface or front end of each of the first guide unit (614A) and the second guide unit (614B). For example, a coupling hole (6B) may be formed on the inner surface of the body (612) of the second housing (610) to engage the coupling lugs (6A) of the first and second guide units (614A, 614B) (see FIG. 16B).

Referring to FIG. 16b, guide lugs (44A to 44D) may be formed on the inner surface of the body (612) of the second housing (610) to guide the first and second guide units (614A, 614B). For example, the first guide lug (44A) may be disposed on the inner surface of the lower surface (142B) of the second housing (610), and the second guide lug (44B) may be disposed on the inner surface of the upper surface (142A) of the second housing (610) in a second direction corresponding to the first guide lug (44A). The first guide unit (614A) may be disposed within the space (49A) between the first and second guide lugs (44A, 44B) and the third side portion (141-3) of the second housing (610).

Furthermore, for example, the third guide lug (44C) may be disposed on the inner surface of the lower surface (142B) of the second housing (610), and the fourth guide lug (44D) may be disposed on the inner surface of the upper surface (142A) of the second housing (610) in a second direction corresponding to the third guide lug (44C). The second guide unit (614B) may be disposed within the space (49B) between the third and fourth guide lugs (44C, 44D) and the fourth side portion (141-4) of the second housing (610).

The first to fourth guide units (614A, 614B) may be stably coupled to the body of the second housing (610) by the first to fourth guide lugs (44A to 44D), and it is possible to prevent the first and second guide units (614A, 614B) from becoming dislodged from their original positions or colliding with the lens unit (620) due to impacts or the like.

The first guide unit (614A) may be provided with a first opening (67A) (or hole) that corresponds to, faces, or overlaps the first magnet (130A). For example, the first opening (67A) may be located between the first magnet (130A) and the first coil (120A).

The second guide unit (614B) may include a second opening (67B) (or hole) that corresponds to, faces, or overlaps with the second magnet (130B). For example, the second opening (67B) may be located between the second magnet (130B) and the second coil (120B). The first and second openings (67A, 67B) may serve to increase the electromagnetic force resulting from the interaction between the first magnet (130A) and the first coil (120A), and the electromagnetic force resulting from the interaction between the second magnet (130B) and the second coil (120B).

In FIGS. 16a and 16b, the first and second guide units (614A, 614B) and the body (612) of the second housing (610) are each formed as separate molded parts, and the separate parts are joined together; however, this is not limited thereto. In another embodiment, the first and second guide units may be formed as a single injection-molded part together with the body of the second housing.

An opening (621) may be formed in the upper surface (142A) of the body (612) of the second housing (610) to expose a portion of the lens unit (620), and the second housing (610) may further include a cover (614) covering the opening (621). In other embodiments, the opening (621) may not be formed, and the cover (614) may be omitted.

The lens unit (620) may include a second lens assembly (622) that moves along the first guide unit (614A) and a third lens assembly (624) that moves along the second guide unit (614B).

Referring to FIGS. 17a, 17b, and 18, the second lens assembly (622) may include a first lens holder (29) and a second lens array (49) (or second lens group) disposed on the first lens holder (29). The lens holder may be expressed by referring to as 'bobbin'.

The second lens array (49) may include a single lens or a plurality of lenses.

The first lens holder (29) may include a first lens barrel (29A) in which the second lens array (49) is disposed, and a first support unit (29B) coupled to the first lens barrel (29A).

For example, the first lens barrel (29A) may be tubular in shape and may include an opening (29C) (or hole) for the second lens array (49) to be coupled thereto.

A first side (or first face) of the first support unit (29B) may be coupled to the first lens barrel (29A). The first support unit (29B) may correspond to, face, or overlap the body (63A) of the first guide unit (614A) in a third direction.

A first seating unit (30A) may be formed on the second side (or second surface) of the first support unit (29B) for the purpose of accommodating or seating the first magnet (130A). The second side (or second surface) of the first support unit (29B) may be the surface facing the first guide unit (614A), or it may be the opposite surface to the first side (or first surface) of the first support unit (29B).

For example, the first seating unit (30A) may include a first seating surface (11A) formed in a region (e.g., the central region) of the second side (or second surface) of the first support unit (29B), and at least one first support lug (11B) projecting from the first seating surface (11A). In FIG. 18, the first seating unit (30A) comprises four first support lugs formed at the four corners of the second side of the first support unit (29B), and the four first support lugs can support the first magnet (130A). In other embodiments, the number of first support lugs of the first seating unit may be one or two or more.

The first support unit (29B) may include at least one first groove (13A) (or first guide groove) for receiving at least a portion of the first rolling member (12A).

For example, at least one first groove (13A) may correspond to, face, or overlap at least one first guide groove (212A) of the first guide unit (614A).

For example, two first grooves spaced apart from one another may be formed on the seating surface (11A) of the first seating unit (30A), and two first grooves spaced apart from one another may be formed beneath the seating surface (11B). In another embodiment, the two grooves formed above or below the seating surface (11B) may be interconnected to form a single groove. For example, the number of grooves may correspond to the number of balls (B11 to B14), but is not limited thereto.

The third lens assembly (624) may include a second lens holder (39) and a third lens array (59) (or third lens group) disposed on the second lens holder (39).

The third lens array (59) may include a single lens or a plurality of lenses. The multiple lenses included in each of the second and third lens arrays (49, 59) may be sequentially disposed or arranged in a first direction. For example, each of the second and third lens arrays (49, 59) may include optical lenses of various types. For example, each of the second and third lens arrays (49, 59) may include at least one of a front lens having a positive power and a rear lens having a negative power.

The distance in the optical axis direction between the second lens group and the third lens group may be varied by the first drive unit (630).

The second lens holder (39) may include a second lens barrel (39A) in which the third lens array (59) is disposed, and a second support unit (39B) coupled to the second lens barrel (39A).

For example, the second lens barrel (39A) may be tubular in shape and may include an opening (39C) (or hole) for the second lens array (49) to be fitted thereinto.

The first side (or first surface) of the second support unit (39B) may be coupled to the second lens barrel (39A). The second support unit (39B) may correspond to, face, or overlap the body (63A) of the second guide unit (614B) in a third direction.

A second seating unit (30B) may be formed on the second side (or second surface) of the second support unit (39B) for the placement or seating of the second magnet (130B). The second side (or second surface) of the second support unit (39B) may be the surface facing the second guide unit (614B), or it may be the opposite surface to the first side (or first surface) of the second support unit (39B).

For example, the second seating unit (30B) may include a second seating surface formed in a region (e.g., a central region) of the second side (or second surface) of the second support unit (39B), and at least one second support lug projecting from the second seating surface. The description of the first seating surface (11A) and the first support lug (11B) of the first support unit (29B) may be applied or be applied mutatis mutandis to the second seating surface of the second support unit (29B) and the second support lug.

The second support unit (39B) may include at least one second groove (13B) (or second guide groove) for receiving at least a portion of the second rolling member (12B).

For example, at least one second groove (13B) may correspond to, face, or overlap at least one second guide groove (212B) of the second guide unit (614B). The description of the first groove (13A) of the first support unit (30A) may be applied or applied mutatis mutandis to the second groove (13B) of the second support unit (30B).

The first and second guide grooves (212A, 212B) and the first and second grooves (13A, 13B) may each be V- or U-shaped, but are not limited thereto, and may be shaped to contact the balls (B11 to B14, B21 to B24) at two or more points. The first and second guide grooves (212A, 212B) and the first and second grooves (13A, 13B) can prevent decentering or tilting from occurring when the second and third lens assemblies (622, 624) move. Consequently, the alignment between the multiple lens arrays is maintained, preventing changes in the field of view or defocusing, thereby significantly improving the image quality and resolution of the camera device (200).

The first actuator (310) may further include rolling members (12A, 12B) disposed between the second housing (610) and the lens unit (620). For example, the rolling members (12A, 12B) may be disposed between the guide units (614A, 614B) of the second housing (610) and the grooves (13A, 13B) of the support units (39A, 39B) of the lens unit (620).

The rolling member may be expressed by being referred to as a 'ball member', "ball", or 'ball bearing'. For example, the rolling members (12A, 12B) may include at least one ball.

The rolling members (12A, 12B) may come into contact with the second housing (610) and the lens unit (620), and may support the lens unit (620). When the lens unit (620) moves in a first direction, the rolling members (12A, 12B) perform a rolling motion between the lens unit (620) and the second housing (610), thereby reducing friction between the lens unit (620) and the second housing (610). That is, due to the rolling motion of the rolling members (12A, 12B), the lens unit (620) may be in contact with the rolling members (12A, 12B) and moved in a sliding manner in the first direction along the first and second guide units (614A, 614B).

For example, the rolling members may include a first rolling member (12A) and a second rolling member (12B). The first rolling member (12A) may be disposed between the first guide unit (614A) of the second housing (610) and the second lens assembly (622) (e.g., the first support unit (29B)). The second rolling member (12B) may be disposed between the second guide unit (614B) of the second housing (610) and the third lens assembly (624) (e.g., the second support unit (39B)).

The first rolling member (12A) may include a plurality of balls (B11 to B14), and the second rolling member (12B) may include a plurality of balls (B21 to B24). Each of the balls (B11 to B14, B221 to B24) may be made of metal, plastic, or resin, but is not limited thereto. Each of the balls (B11 to B14, B221 to B24) may have a circular shape and may have a diameter of sufficient size to support the movement of the lens unit (620).

Next, the first drive unit (630) is described.

The first drive unit (630) can move the second lens assembly (622) in the first direction and move the third lens assembly (624) in the first direction.

For example, the first drive unit (630) can move at least one lens group, such as the second lens group or the third lens group, in the first direction or along the optical axis.

The first drive unit (630) may include a magnet (130) disposed in the lens unit (620) and a coil (120) disposed in the second housing (610). For example, the magnet (130) may include a first magnet (130A) disposed in the second lens assembly (622) and a second magnet (130B) disposed in the third lens assembly (624).

For example, the first magnet (130A) may be disposed in the first lens holder (29) of the second lens assembly (622), and the second magnet (130B) may be disposed in the second lens holder (39) of the third lens assembly (624).

For example, the first magnet (130A) may be disposed in the first seating unit (30A) of the first support unit (29B) of the first lens holder (29), and the second magnet (130B) may be disposed in the second seating unit (30B) of the second support unit (39B) of the second lens holder (39).

For example, each of the first and second magnets (130A, 130B) may be a single-pole magnet comprising one N-pole and one S-pole. In another embodiment, each of the first and second magnets (130A, 130B) may be a bipolar magnet comprising two N-poles and two S-poles.

The coil (120) may include a first coil (120A) that corresponds to, faces, or overlaps with a first magnet (130A) in a third direction and is disposed on a third side portion (142-3) of the second housing (610), and a second coil (120B) that corresponds to, or overlap with the second magnet (130B) in the third direction and disposed on the fourth side portion (142-4) of the second housing (610).

For example, the first coil (120A) and the second coil (120B) may each be in the form of a closed curve or ring having a hollow (or hole). For example, each of the first coil (120A) and the second coil (120B) may be in the shape of a coil ring wound clockwise or counter-clockwise about a third axis parallel to a third direction.

For example, the N-pole and S-pole of the first magnet (130A) may be disposed to face the first coil (120A), and the N-pole and S-pole of the second magnet (130B) may be disposed to face the second coil (120B). For example, the hollow or hole of each of the first and second coils (120A, 120B) may face the first and second magnets (130A, 130B) in a third direction.

A first drive signal (e.g., a first current) may be applied to the first coil (120A), and a second drive signal (e.g., a second current) may be applied to the second coil (120B).

The first lens assembly (622) may be moved in a first direction by an electromagnetic force resulting from the interaction between the first coil (120A) and the first magnet (130A). Furthermore, the second lens assembly (624) may be moved in the first direction by the electromagnetic force resulting from the interaction between the second coil (120B) and the second magnet (130B).

By controlling the first drive signal and the second drive signal, each movement of the first lens assembly (622) and the second lens assembly (624) can be controlled. As the movements of the first lens assembly (622) and the second lens assembly (624) are controlled, the respective positions (or displacements) of the first lens assembly (622) and the second lens assembly (624) can be controlled, thereby enabling zooming and autofocusing of the camera device (200).

Referring to FIG. 18, the first drive unit (630) may further include a first yoke (19-1) disposed on the first lens holder (29) and a second yoke (19-2) disposed on the second lens holder (39).

The first yoke (19-1) may increase the electromagnetic force generated by the interaction between the first magnet (130A) and the first coil (120A), and the second yoke (19-2) may increase the electromagnetic force generated by the interaction between the second magnet (130B) and the second coil (120B). The driving force for moving the lens unit (620) can be enhanced by the first and second yokes (19-1, 19-2), thereby reducing power consumption.

For example, the first yoke (19-1) may be disposed between the first magnet (130A) and the first lens holder (29), and the second yoke (19-2) may be disposed between the second magnet (130B) and the second lens holder (39). For example, the first yoke (19-1) may be disposed in the first seating unit (30A) of the first support unit (29B), and the second yoke (19-2) may be disposed in the second seating unit (30B) of the second support unit (39B).

For example, the first yoke (19-1) may include a first portion (19A) disposed opposite the first magnet (130A) in a third direction and arranged on the first seating surface (11A), and a second portion (19B) extending from at least one of the one end and the other end of the first portion (19A). For example, the second portion (19B) may include a second-1 portion supporting one end of the first magnet (130A) and a second-2 portion supporting the other end of the first magnet (130A).

The first drive unit (630) may further include a second substrate unit (190) electrically connected to the first coil (120A) and the second coil (120B). For example, the second substrate unit (190) may be a printed circuit board.

The second substrate unit (190) may be disposed within the second housing (610). For example, the second substrate unit (190) may include a first circuit substrate (192) disposed on a third side portion (142-3) of the second housing (610) and a second circuit substrate (194) disposed on a fourth side portion (142-4) of the second housing (610). For example, the first circuit substrate (192) may include at least one hole (192A) for engaging with at least one first coupling lug (45A) of the second housing (610), the second circuit substrate (194) may include at least one hole (194A) for engaging with at least one second coupling lug (45B) of the second housing (610).

The first coil (120A) may be disposed or mounted on a first surface of the first circuit substrate (192). In this case, the first surface of the first circuit substrate (192) may be the surface facing the third side portion (142-3) of the second housing (610) in the third direction. The second coil (120B) may be disposed or mounted on a first surface of the second circuit substrate (194). In this case, the first surface of the second circuit substrate (194) may be the surface facing the fourth side portion (142-4) of the second housing (610) in the third direction.

The first circuit substrate (192) may be electrically connected to the first coil (120A). For example, two pads electrically connected to the first coil (120A) may be formed on a first surface of the first circuit substrate (192). Furthermore, the first circuit substrate (192) may include a plurality of terminals (254A). For example, the plurality of terminals (254A) may be formed on a second surface of the first circuit substrate (192). For example, the second surface of the first circuit substrate (192) may be the opposite surface to the first surface of the first circuit substrate (192). For example, two of the plurality of terminals (254A) may be electrically connected to two pads on the first circuit substrate (192) that are connected to the first coil (120A), and may be electrically connected to the first coil (120A).

The second circuit substrate (194) may be electrically connected to the second coil (120B). For example, two pads electrically connected to the second coil (120B) may be formed on a first surface of the second circuit substrate (194). Furthermore, the second circuit substrate (194) may include a plurality of terminals (254B).

For example, the plurality of terminals (254B) may be formed on a second surface of the second circuit substrate (194). For example, the second surface of the second circuit substrate (194) may be the opposite surface to the first surface of the circuit substrate (192). Although the terminals (254B) cannot be seen in detail in FIG. 15, terminals (254B) may be formed on the second surface of the second circuit substrate (194) in the same configuration as the terminals (254A) on the first circuit substrate (192).

For example, two of the multiple terminals (254B) may be electrically connected to two pads on the second circuit substrate (194) that are connected to the second coil (120B), and may be electrically connected to the second coil (120B).

The second drive unit (70) may include a first position sensor unit (170) for performing feedback drive to ensure accurate zooming and AF operation.

The first position sensor unit (170) may include a first position sensing unit (71) for detecting the position or displacement of the second lens assembly (622) and a second position sensing unit (72) for detecting the position or displacement of the third lens assembly (624).

For example, the first position sensing unit (71) may be disposed or mounted on the first circuit substrate (192) and may be electrically connected to the first circuit substrate (192). The second position sensing unit (72) may be disposed on or mounted on the second circuit substrate (194) and may be electrically connected to the second circuit substrate (184).

For example, the first position sensing unit (71) may be disposed or mounted on a first surface of the first circuit substrate (192), and the second position sensing unit (72) may be disposed or mounted on a first surface of the second circuit substrate (194). For example, the first position sensing unit (71) may be disposed within a hollow of the first coil (120A), and the second position sensing unit (72) may be disposed within the hollow of the second coil (120B)

For example, the first position sensing unit (71) may face or overlap the first magnet (130A) in a third direction. For example, the first position sensing unit (71) may be disposed on the opposite side of the first magnet (130A).

The strength of the magnetic field of the first magnet (130A) can be detected. For example, the first position sensing unit (71) can detect the movement of the first magnet (130A) in the optical axis direction. The second position sensing unit (72) may face or overlap with the second magnet (130B) in a third direction. For example, the second position sensing unit (72) may be disposed opposite the second magnet (130B).

The strength of the magnetic field of the second magnet (130B) can be detected. For example, the second position sensing unit (72) can detect the movement of the second magnet (130B) in the optical axis direction.

For example, the first position sensing unit (71) may include a first sensor (71A) and a second sensor (71B). For example, each of the first and second sensors (71A, 71B) may be a Hall sensor. For example, the first sensor (71A) and the second sensor (71B) may be disposed at a distance from one another in a first direction.

For example, the second position sensing unit (72) may include a third sensor (72A) and a fourth sensor (72B). For example, each of the third and fourth sensors (72A, 72B) may be a Hall sensor. For example, the third sensor (72A) and the fourth sensor (72B) may be disposed at a distance from one another in the first direction.

In FIG. 15, the first position sensing unit (71) and the second position sensing unit (72) each include two sensors; however, in other embodiments, the first position sensing unit and the second position sensing unit may each include a single sensor, in which case the single sensor may be a Hall sensor or a driver IC including a Hall sensor.

The camera device (200) may include memory (596) disposed on the second substrate (190). For example, the memory (596) may be non-volatile memory, such as EEPROM (Electrically Erasable PROM).

For example, the memory (596) may be disposed or mounted on the second circuit substrate (194) and may be electrically connected to the second circuit substrate (194).

After assembly of the actuators (610, 620) is complete, a unit-level process inspection is performed to test the actuators' operating characteristics. At this stage, the testing of the drive characteristics may include Hall calibration, lens inspection, or an active alignment process for actively aligning the image sensor and the lens. For example, lens inspection may include testing to verify resolution while moving the lens assembly.

A storage device is required to store relevant information and data for these drive characteristic inspections; however, as the first driver (542) is not provided in the camera device during the individual process inspection stage for the actuators (610, 620), the memory (596) can store the values or data necessary for inspecting the drive characteristics of the actuators (610, 620).

For example, the memory (596) can store data required for the operation of the drive unit.

At this time, the drive unit may include at least one of a first drive unit (630) and a second drive unit (70). For example, the memory (596) may store at least one of the data from the first position sensing unit (71), corresponding to the range of movement of the second lens group, and the data from the second position sensing unit (72), corresponding to the range of movement of the third lens group.

At this time, the data from the first position sensing unit (71) may be data (or reference code values) relating to the output of the first position sensing unit (71) corresponding to the movement range of the second lens group, obtained through calibration. Furthermore, the data from the second position sensing unit (72) may be data (or reference code values) relating to the output of the second position sensing unit (72) corresponding to the movement range of the third lens group, obtained through calibration.

Furthermore, the memory (596) may store data from the first OIS position sensors (240A, 240B) corresponding to the tilt range of the second axis (X-axis) of the OIS moving unit. In this case, the data from the first OIS position sensors (240A, 240B) may be reference code values relating to the output of the first OIS position sensors (240A, 240B) corresponding to the tilt range of the second axis (X-axis) of the OIS moving unit, as acquired through calibration.

Furthermore, the memory (596) can store data from the second OIS position sensor (240C) corresponding to the tilt range of the third axis (Y-axis) of the OIS moving unit**.** At this time, the data from the second OIS position sensor (240C) may be a reference code value relating to the output of the second OIS position sensor (240C) corresponding to the tilt range of the third axis (Y-axis) of the OIS moving unit, as acquired through calibration.

The first driver (542) may be provided in the camera device after the completion of the active alignment process. Therefore, the embodiment facilitates the performance of individual process inspections for actuators included in the camera device by mounting, arranging, or providing a memory in the actuator to store values necessary for inspecting the driving characteristics of the actuators (610, 620). The memory (596) may remain in the product after the individual process inspection has been completed.

In another embodiment, the memory (596) may be removed from the final product prior to shipment and thus omitted.

For example, the memory (596) may be electrically connected to at least one of the multiple terminals (254B) of the second circuit substrate (194).

The camera device (200) may further comprise a temperature sensor (566) disposed on the second substrate unit (190). For example, the temperature sensor (566) may measure the temperature of the camera device (200) or the surroundings of the camera device (200), and output temperature information based on the measured results.

Referring to FIG. 15, the first actuator (310) may further comprise a glass (115) disposed in front of the lens unit (620). For example, the glass (115) may be disposed within the second housing (610) so as to cover the first opening (41A) of the second housing (610), thereby protecting the lens unit (620) and preventing foreign matter from entering the second housing.

The image sensing unit (330) may include an image sensor (540) that receives and detects light having passed through the optical member (40) of the second actuator (320) and the lens assemblies (640, 622, 624) of the first actuator (310), and converts the detected light into an electrical signal.

For example, the image sensor (540) may include an imaging area for detecting light. Here, the imaging area may be expressed by being replaced by an effective area, a light-receiving area, or an active area. For example, the imaging area may include a plurality of pixels on which an image is formed.

The image sensing unit (330) may include a third substrate unit (530) that is electrically connected to the image sensor (540). The third substrate unit (530) may be disposed spaced apart from the second housing (610). For example, the third substrate unit (530) may be expressed by being replaced by a sensor substrate unit.

With respect to the second housing (610), the first substrate unit (250) may be disposed at the front of the second housing (610), the third substrate unit (530) may be disposed at the rear of the second housing (610), and the second substrate unit (190) may be disposed at the side of the second housing (610).

For example, the second substrate unit (190) may be disposed on a first side (e.g., the left or right side) of the second housing (610). For example, the first circuit substrate (192) may be disposed on the first side of the second housing (610), and the second circuit substrate (192) may be disposed on the third side of the second housing (610). The third substrate unit (530) may be disposed on a second side (e.g., the rear) of the second housing (610).

Furthermore, the first substrate unit (250) may be disposed on a fourth side of the second housing (610). The first side and the third side may be located opposite one another, and the second side and the fourth side may be located opposite one another.

The third substrate unit (530) may include a first substrate (531) on which the image sensor (540) is disposed or mounted. For example, the image sensor (540) may be disposed on a first surface of the first substrate (531), and the first surface of the first substrate (531) may be the surface facing the first actuator (310) or the lens unit (620). The first substrate (531) may also be expressed by being replaced with 'sensor substrate'.

The first substrate (531) may include a plurality of first terminals (253A) and a plurality of second terminals (253B). For example, the plurality of first terminals (253A) may be disposed between the image sensor (540) and a first end of the first substrate (531), and the plurality of second terminals (253B) may be disposed between the image sensor (540) and a second end of the first substrate (531). The first end may be located opposite the second end.

For example, the plurality of first terminals (253A) may correspond to, face, or overlap with the plurality of terminals (254A) on the first circuit substrate (192) in a first direction, and may be electrically connected to the plurality of terminals (254A) on the first circuit substrate (192) by solder or conductive adhesive.

For example, to facilitate solder bonding, the end (or first end) or terminal unit of the first circuit substrate (192) on which the plurality of terminals (254A) are formed may include a bent or curved portion. For example, the terminal unit of the first circuit substrate (192) on which the plurality of terminals (254A) are formed may be an inwardly curved or bent, sloping portion.

For example, the plurality of second terminals (253B) may correspond to, face, or overlap the plurality of terminals (254B) on the second circuit substrate (194) in a first direction, and may be electrically connected to the plurality of terminals (254B) on the second circuit substrate (194) by solder or conductive adhesive.

For example, to facilitate solder bonding, the end (or first end) or terminal unit of the second circuit substrate (194) on which the multiple terminals (254B) are formed may include a bent or curved portion. For example, the terminal unit of the second circuit substrate (194) on which the plurality of terminals (254B) are formed may be a long, sloping portion that is bent or curved inwards.

The third substrate unit (530) may include a second substrate (532) connected to the first substrate (531) and extending in the first direction. The second substrate (532) may include a plurality of terminals (252). The first substrate unit (250) may be electrically connected to the third substrate unit (530). For example, by means of a conductive adhesive or solder, the plurality of terminals (252) on the second substrate (532) may be electrically connected to the plurality of terminals (251) on the first circuit substrate (250A) of the first substrate unit (250).

For example, with reference to FIGS. 12, 13a, and 13b, the second substrate (532) may be disposed to face the first circuit substrate (192) in a third direction and may be disposed on the second surface of the first circuit substrate (192). For example, the third substrate unit (530) may include a bent portion between the first substrate (532) and the second substrate (532).

The third substrate unit (530) may include a connector (534) including a port or socket for electrical connection to an external device. For example, the port or socket may be formed on at least one of the upper (upper surface) or lower (lower surface) sides of the connector.

Furthermore, the third substrate unit (530) may further include a third substrate (533) that connects the second substrate (532) and the connector (534). The third substrate unit (530) may be a printed circuit board. For example, each of the first to third substrates (531, 532, 533) may include at least one of a rigid substrate and a flexible substrate.

In another embodiment, at least one of the second substrate (532) and the connector (534) may be omitted, and the port or socket may be formed on the first substrate. In yet another embodiment, the port or socket may be formed on at least one of the first to third substrates.

The image sensing unit (330) may further include a first driver (542) disposed on the third substrate unit (530). The first driver (542) may be disposed or mounted on the first substrate (531).

For example, the first driver (542) may be disposed between the image sensor (540) and a plurality of second terminals (253B). Each of the first driver (542) and the second driver (260) may be referred to as a "control unit". Furthermore, for example, each of the first and second drivers (542, 260) may include a storage unit or memory.

The third substrate unit (530) may also be provided with circuit elements, passive elements, active elements, or circuit patterns.

The image sensing unit (330) may further include a sensor base (550) disposed between the third substrate unit (530) and the first actuator, and a filter (560) disposed on the sensor base (550). For example, the sensor base (550) may be disposed between the first substrate (531) of the third substrate unit (530) and the second housing (610).

The sensor base (550) may be bonded, attached or fixed to the first surface of the first substrate (531) by means of an adhesive (545). The underside or lower surface of the sensor base (550) may be bonded to the first surface of the first substrate (531) by means of the adhesive (545).

For example, at least one coupling lug (551) may be formed on the lower surface or lower end of the sensor base (550), and at least one hole (530A) may be formed in the first substrate (531) for coupling with the at least one coupling lug (551).

The sensor base (550) may include a seating unit (550A) for disposing or mounting the filter (610). For example, the seating unit (550A) may be formed on the first surface of the sensor base (550). The first surface of the sensor base (550) may be the surface facing the second housing (610) in a first direction. For example, the seating unit (500A) may, but is not limited to, taking the form of a recess, cavity, or hole recessed from the first surface of the sensor base (550). In another embodiment, the seating unit may take the form of a protrusion projecting from the first surface of the sensor base (550). The sensor base (550) may also be referred to as a "holder".

The filter (560) is disposed in the seating unit (550A) of the sensor base (550). For example, the seating unit (550A) of the sensor base (550) may include an inner surface and a bottom surface, and the filter (560) may be disposed on the bottom surface of the seating unit (550A) of the sensor base (550).

The sensor base (550) may include an opening (552) (or through-hole) to allow light passing through the filter (560) to enter the image sensor (540). The opening (552) may correspond to, face, or overlap the image sensor (550) (e.g., the imaging area). For example, the opening (552) may be formed on the bottom surface of the seating unit (550A). The area of the opening (552) may be smaller than the area of the upper surface or lower surface of the filter (560), but is not limited thereto.

The filter (560) may serve to block light within a specific frequency band from entering the image sensor (540) among the light passing through the lens unit (620). For example, the filter (560) may be an infrared-blocking filter, but is not limited thereto. For example, the filter (560) may be disposed to be parallel to the x-y plane perpendicular to the first direction. For example, the filter (560) may be attached to the bottom surface of the seating unit (550A) of the sensor base (550) by an adhesive member (not shown), such as UV epoxy. The filter (560) and the image sensor (540) may be spaced apart so that they face each other in the first direction.

The image sensing unit (330) may further include a reinforcing member (510) disposed on the third substrate unit (530). For example, the reinforcing member (510) may be disposed on a second surface of the first substrate (531), and the second surface of the first substrate (531) may be the surface opposite the first surface of the first substrate (531).

The reinforcing member (510) may be formed of a conductive material with high thermal conductivity, such as a metal. For example, the reinforcing member (510) may be formed of SUS, aluminum, or the like, but is not limited thereto.

Furthermore, by being electrically connected to the ground terminal of the third substrate unit (530), the reinforcing member (510) may also serve as a ground to protect the camera device (200) from ESD (Electrostatic Discharge Protection).

The image sensing unit (330) may further include a heat dissipation member (520) disposed on or attached to the reinforcing member (510). For example, the heat dissipation member (52) may be attached to at least one of the first substrate (531) and the reinforcing member (510) and may perform a heat dissipation function.

Next, the first position sensing unit (71) and the second position sensing unit (72) will be described.

The first sensor (71A) may include a first input terminal, a second input terminal, a first output terminal, and a second output terminal. The second sensor may include a first input terminal, a second input terminal, a first output terminal, and a second output terminal.

For example, the first input terminal of the first sensor (71A) and the first input terminal of the second sensor (71B) may be negative (-) input terminals, and the second input terminal of the first sensor (71A) and the second input terminal of the second sensor (71B) may be positive (+) input terminals. Here, the positive and negative terminals not only denote polarity but may also imply a difference in relative magnitude even when the polarities are the same.

Furthermore, for example, the first output terminal of the first sensor (71A) and the first output terminal of the second sensor (71B) may be negative (-) output terminals, and the second output terminal of the first sensor (71A) and the second output terminal of the second sensor (71B) may be positive (+) output terminals.

The first and second input terminals of the first sensor (71A) and the first and second input terminals of the second sensor (71B) may be connected in parallel. The first and second output terminals of the first sensor (71A) and the first and second output terminals of the second sensor (71B) may be connected in series.

Furthermore, a first output signal, such as a first output voltage, may be output from the second output terminal of the first sensor (71A) and the first output terminal of the second sensor (71B). For example, the first output signal may be the sum of the outputs of the first sensor (71A) and the second sensor (71B). For example, the sensing range of the first position sensing unit (71) can be expressed as the sum of the sensing ranges of the first sensor (71A) and the second sensor (71B). The first output signal (V1) may be output through the first and second terminals of the circuit substrate (192). Furthermore, for example, the third and fourth terminals of the first circuit substrate (192) may be electrically connected to the first coil (120A).

Since the output terminals of the first and second sensors (71A, 71B) are connected in series, the strength of the first output signal may be greater than that of a single sensor. That is, in the embodiment, by connecting the output terminals of the first and second sensors (71A, 71B) in series, the strength of the first output signal from the first position sensing unit (71), which corresponds to the range of movement (displacement or stroke range) of the second lens assembly (622) in the first direction, can be increased.

To perform continuous zooming, control over the long stroke range or travel range of the second lens assembly (622) is required, and for easy control over the long stroke range (or travel range), the output of the Hall sensor detecting the displacement of the second lens assembly must be large.

Generally, if the output of the Hall sensor is forcibly increased using a digital method, the feedback control characteristics may deteriorate due to noise, which can reduce the reliability of zooming and focusing operations. Furthermore, if an analog amplifier is installed in the camera device to amplify the Hall sensor's output, spatial constraints resulting from the installation of the analog amplifier may arise, potentially limiting the design freedom (flexibility) of the camera device.

In the embodiment, the strength of the output signal from the first position sensing unit (71) can be increased by connecting the output terminals of the two Hall sensors (71A, 71B) in series. This improves the performance of the first actuator (310) with respect to the second lens assembly (622) and resolves the aforementioned issues.

For example, since the strength of the first output signal increases, the code value (or data) corresponding to the first output signal of the first position sensing unit (71) can be increased, the sensitivity of the first position sensing unit (71) to the movement of the second lens assembly (622) can be improved, and consequently, the resolution of the camera device can be enhanced. In this case, the code value may be a code value (or data) preset through calibration.

The description of the electrical connection relationships with each input terminals and output terminals of the first sensor (71A) and second sensor (71B), output signal of the first position sensing unit (71), the first coil (120A), and terminals of first circuit substrate (192) may be also be applied, or applied by analogy to the description of the electrical connection relationships with the third sensor (72A) and the fourth sensor (72B), the output signal of the second position sensing unit (72), the second coil (120B) and the second circuit substrate (194). For example, a second output signal, such as a second output voltage, may be output from the series-connected output terminals of the third sensor (72A) and the fourth sensor (72B). Since the output terminals of the third and fourth sensors (72A, 72B) are connected in series with one another, the strength of the second output signal may be greater than that of the output from a single sensor. That is, in the embodiment, by connecting the output terminals of the third and fourth sensors (72A, 72B) in series, the strength of the second output signal from the second position sensing unit (72), corresponding to the range of movement (or displacement, or stroke range) of the third lens assembly (624) in the first direction, can be increased. The aforementioned effect resulting from the increase in the strength of the first output signal of the first position sensing unit (71) may also be applied or analogously applied to the second position sensing unit (72).

The memory (596) may be located on the outer side of the second coil (120B). For example, the memory (596) may be located outside the hollow of the second coil (120B).

The second circuit substrate (194) may include terminal units (or pads) (not shown) for the memory (596) to be mounted or soldered onto and electrically connected; the terminal units may be located on the outer side of the coil (120B) or outside the hollow of the coil (120B).

The memory (596) may include two input terminals, a data terminal, and a clock terminal, and these terminals may be electrically connected to the second circuit substrate. The memory (596) may include a plurality of test terminals that are electrically connected to the two input terminals, the data terminal, and the clock terminal.

Using a protocol for data communication, such as I2C communication, the memory (596) may transmit data to the outside or receive data from the outside via the test terminals. In this case, the data may be data required to perform a single-unit process inspection of the actuator, such as data required to drive the drive units (630, 70).

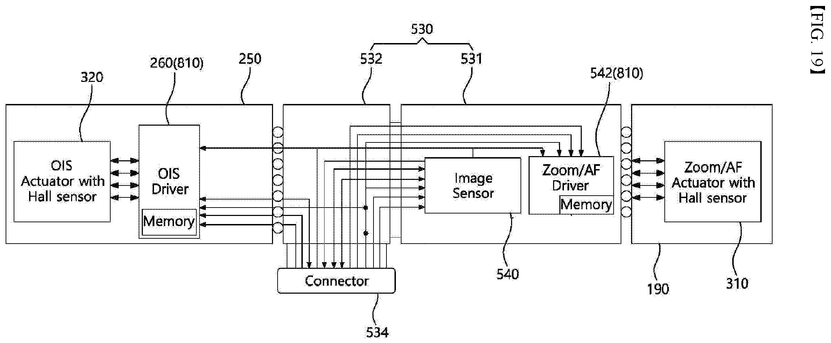

FIG. 19 shows a functional block diagram of a camera device (200) according to an embodiment.

Referring to FIG. 19, the camera device (200) may include a first substrate unit (250), a second substrate unit (190), a third substrate unit (530), a first actuator (310), a second actuator (320), a control unit (810), and an image sensor (540). For example, the control unit (810) may include a first driver (542) and a second driver (260).

The first driver (542) can move the second lens assembly (622) (or the second lens group) along the optical axis. The first driver (542) can move the third lens assembly (624) (or the third lens group) along the optical axis.

The first driver (542) can apply a first drive signal to the first coil (120A) and a second drive signal to the second coil (120B), and can control the first and second drive signals.

Through the interaction between the first coil (120A), to which the first drive signal is applied, and the first magnet (130A), the second lens assembly (622) can be moved in a first direction; and the third lens assembly (624) may be moved in the first direction by the interaction between the second coil (120B), to which a second drive signal is applied, and the second magnet (130B).

The second driver (260) can tilt or rotate the OIS moving unit (e.g., the optical element (40)) by a predetermined angle about the second axis and/or the third axis. Furthermore, the second driver (260) can store a correction value and using that correction value to control the tilt of the optical member (40).

The second driver (260) can apply the first OIS drive signal to the first OIS coils (230A, 230B). Through the interaction between the first OIS coils (230A, 230B), to which the first OIS drive signal is applied, and the first OIS magnets (31A, 31B), the OIS moving unit (e.g., the holder (30)) can be rotated by a predetermined angle about a second axis (e.g., the X-axis).

Furthermore, the second driver (260) can apply the second OIS drive signal to the second OIS coil (230C). Through the interaction between the second OIS coil (230C), to which the second OIS drive signal is applied, and the second OIS magnet (32), the OIS moving unit (e.g., holder (30)) can be rotated by a predetermined angle about a third axis (e.g., the Y-axis).

Through the movement of the holder (30) coupled to the optical member (40), the path of light incident on the optical member (40) can be shifted within a plane perpendicular to the first axis (optical axis or Z-axis) (e.g., the XY plane), thereby enabling the image formed on the image sensor (540) to be shifted in the X-axis direction or/ and the Y-axis. For example, the optical member (40) may be tiltable relative to the X-axis or Y-axis, or rotatable by a predetermined angle.

In other words, by controlling the movement of the holder (30), the embodiment can compensate for image blurring or video shake caused by camera shake during image or video capture due to the user's hand tremors.

For example, each of the first driver (542) and the second driver (260) may include at least one of an analogue-to-digital converter, an amplifier, a PID controller, or a memory.

The first driver (542) may receive a first output signal from the first position sensing unit (71) of the first position sensor unit (170) and a second output signal from the second position sensing unit (72) of the first position sensor unit (170).

The first driver (542) may generate a first code value based on the result of analogue-to-digital conversion of the first output signal received from the first position sensing unit (71), and may control the first drive signal applied to the first coil (120A) based on the result of comparing the generated first code value with a first target value. For example, the first target value may be a reference code value corresponding to the desired zoom position of the second lens assembly (622).

Furthermore, the first driver (542) generates a second code value based on the result of analogue-to-digital conversion of the second output signal received from the second position sensing unit (72), and controls the second drive signal applied to the second coil (120B) based on the result of comparing the generated second code value with the second target value. For example, the second target value may be a reference code value corresponding to the target focus position of the third lens assembly (624).

Reference code values (or data) relating to the outputs of each of the first and second position sensing units (71, 72) may be preset through calibration and stored in the memory of the first driver (542). In another embodiment, the reference code values may be stored in the memory unit (760) of the optical device (200A).

The second driver (260) may receive the first output signal from the first OIS position sensor (240A, 240B) and the second output signal from the second OIS position sensor (240C) of the second position sensing unit (240).

The second driver (260) may generate a third code value based on the result of the analogue-to-digital conversion of the first output signal received from the first OIS position sensors (240A, 240B), and control the first drive signal applied to the first OIS coils (230A, 230B) of the second drive unit (70) based on compared result of the generated third code value with the third target value.

Furthermore, the second driver (260) may generate a fourth code value based on the result of analogue-to-digital conversion of the second output signal from the received second OIS position sensor (240C), and control the second drive signal applied to the second OIS coil (230C) based on the result of comparing the generated fourth code value with the fourth target value.

For example, the third target value may be a reference code value (or data) relating to the output of the first OIS position sensor (240A, 240B) corresponding to the target second-axis (X-axis) tilting position of the OIS moving unit of the second actuator (320). Furthermore, for example, the fourth target value may be a reference code value (or data) relating to the output of the second OIS position sensor (240C) corresponding to the target third-axis (Y-axis) tilting position of the OIS moving unit of the second actuator (320). The reference code values (or data) relating to the outputs of each of the first OIS position sensors (240A, 240B) and the second OIS position sensor (240C) may be preset through calibration and stored in the memory of the second driver (260). In another embodiment, the reference code values may be stored in the memory unit (760) of the optical device (200A).

The first position sensor unit (170) included in the first actuator (310) can detect the displacement of the second lens assembly (622) and output a first output signal based on the detection results. Furthermore, the first position sensor unit (170) can detect the displacement of the third lens assembly (624) and output a second output signal based on the detection results.

Each of the first and second sensors (240A, 240B) of the first OIS position sensor can detect displacement of the holder (30) in the third axis direction and output an output signal based on the detected result.

Alternatively, in another embodiment, the input terminals of the first and second sensors (240A, 240B) may be connected in parallel, the output terminals of the first and second sensors (240A, 240B) may be connected in series, and a single output signal may be output from both ends of the series-connected output terminals.

The second OIS position sensor (240C) can detect displacement in the second axis direction of the holder (30) and can output an output signal based on the detected result.

For example, the focus of the camera device (200) can be accurately adjusted based on the target positions of the second lens assembly (622) and the third lens assembly (624).

The image sensing unit (330) may include an image sensor (540) that converts light reflected from a subject into an electrical signal. For example, the image sensor (540) may include a light-receiving unit that receives light and converts it into an electrical signal, and an analogue-to-digital converter that converts the converted electrical signal into a digital signal. Furthermore, for example, the image sensor (540) may further include an image signal processor that performs signal processing on the digital signal.

The camera device (200) may further include a temperature sensor (566) for temperature compensation.

The temperature sensor (566) may output temperature information based on the results of measuring the temperature of the camera device (200).

The temperature data from the temperature sensor (566) may be used for temperature compensation of the focusing operation of the third lens assembly (624). For example, compensation values corresponding to the temperature data may be stored in the memory (226B) of the first driver (542).

For example, as the second lens assembly (622), which is responsible for zooming, moves according to the magnification set by the user, temperature compensation for the third lens assembly (624), which is responsible for autofocusing, can be performed while the position of the second lens assembly (622) is fixed (or under fixed conditions).

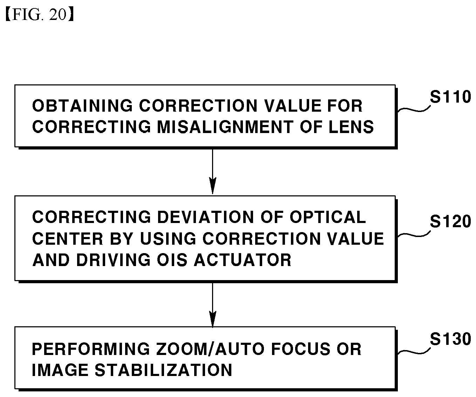

FIG. 20 is a flowchart illustrating a control method of the control unit (810) for performing zooming and AF or image stabilization in a camera device according to an embodiment.

Referring to FIG. 20, the control unit (810) acquires a correction value for correcting or compensating for a deviation (or tilt) of the optical axis (or optical center) caused by the skew (or tilt) of the lens assembly (or lens) (S110). For example, in FIG. 20, the control unit (810) may be the second driver (260). The correction value may also be expressed as a 'compensation value' or a 'setpoint'.

Here, the term 'acquire' may include 'receive', 'extract', 'select', or 'read'.

For example, the correction value may relate to the initial position of the optical member (40) for correcting misalignment of the center of a fixed lens group or the center of a moving lens group within the lens assembly. For example, the correction value may be a data value (or code value) corresponding to the output of OIS position sensors (240; first OIS position sensors (240A and 240B), and second OIS position sensor (240C)) that detect the displacement of the optical member (40) for setting the initial position of the optical member (40).

For example, the correction value may include data values relating to the output of the first position sensors (240A, 240B) corresponding to the initial position of the optical member (40). Furthermore, the correction value may include data values relating to the output of the second position sensor (240C) corresponding to the initial position of the optical member (40).

Next, the control unit (810) uses the correction value to correct the deviation (or tilt) of the optical axis (or optical center) caused by the misalignment (skew) of the lens assembly (or lens) by moving the OIS moving unit (e.g., by moving the holder (30)) of actuator (320) (S120)

Next, while the deviation (or tilt) of the optical axis (or optical center) has been corrected, zoom/autofocus operations or image stabilization operations are performed (S130).

The correction values may be stored in memory included within the control unit (810), and the control unit (810) may retrieve the correction values from the built-in memory. In other embodiments, the correction values may be retrieved from memory provided separately from the control unit (810).

For example, a deviation of the optical center or optical axis may refer to the degree to which the optical axis (or optical center) of the lens assembly (or lens) is misaligned or tilted relative to a reference position. For example, the reference position may be a preset position (or set of coordinates) at which the optical axis (or optical centre) of the lens assembly (or lens), when the lens assembly (or lens) is free from misalignment, is aligned with the imaging area of the image sensor (540).

For example, the reference position (or preset coordinate value) may be the center of the image sensor's (540) imaging area (or the coordinate value of the center, e.g., the origin (0,0)).

For example, the deviation (or tilt amount) may be the difference between the coordinate value of a first position in the imaging area of the image sensor (540) at which the optical axis (or optical center) of the misaligned or tilted lens assembly (or lens) is aligned, and the preset coordinate value. For example, the correction value may be generated based on the deviation.

Ideally, in the absence of any misalignment (or tilt) of the lens assembly (or lens), the optical axis (or optical center) of the lens assembly can be aligned with the reference position (or preset coordinate values) of the image sensor (540). However, if there is a misalignment (or tilt) of the lens assembly, the optical axis (or optical center) of the lens assembly (or lens) will not be aligned with the reference position of the image sensor (540), but may instead be aligned with a first position within the imaging area of the image sensor (540) that is not the reference position. For example, the amount of deviation or tilt may be the difference between the reference position and the first position. For example, the deviation may be the difference in coordinate values between the reference position and the first position.

There may be various causes for misalignment of the lens assembly. For example, the cause may be the shape of the lens barrel (29A, 39A) of the lens assembly, the shape of the guide grooves (212A, 212B) (e.g., the degree of warping), or a misalignment of the centre due to the installation of the lenses included in the lens assembly. In particular, a zoom camera device may include two or more lens assemblies, and because the stroke or travel distance of the lens assembly (e.g., a zoom lens) in the optical axis direction is long, misalignment of the lens may occur due to the movement of the lens assembly.

For example, tilt may include at least one of static tilt and dynamic tilt. Static tilt may refer to the tilt of the lens assembly (or lens) at a specific position (e.g., a zoom position or a focus position). Dynamic tilt may refer to the tilt of the lens assembly (or lens) at any two specific positions (e.g., two zoom positions or two focus positions).

For example, the lens assembly subject to the aforementioned tilt may include at least one of a second lens assembly (622) (or a second lens group) and a third lens assembly (624) (or a third lens group). In another embodiment, the lens assembly subject to misalignment may further include the first lens assembly (622).

Furthermore, for example, the subject of misalignment may include at least one of the lens groups, lenses, or lens barrels included in the lens assembly.

For example, in the ideal case where there is no misalignment (or tilt) of the lens assembly (or lens), data values corresponding to the outputs of the first position sensor (240A, 240B) and the second position sensor (240C) may be set such that the initial position of the optical member (40) is located at a preset position. For example, the preset position may be a position where the center of the first sensor (240A) is aligned with or coincides with the center of the first magnet unit (31A), and where the center of the second sensor (240B) is aligned with or coincides with the center of the second magnet unit (31B), or a position where the center of the third sensor (240C) is aligned with or overlaps the center of the third magnet unit (31C).

For example, at the initial position of the optical member (40) controlled by the correction value, the centers of each of the first to third sensors may not be aligned with or overlap any one of the corresponding centers of the first to third magnet units.

In another embodiment, when there is no misalignment (or tilt) of the lens assembly (or lens), the preset position may be set to data values corresponding to the outputs of the first position sensors (240A, 240B) and second position sensors (240C) that are independent of the misalignment (or tilt) of the lens assembly (or lens).

The control unit (810) may use the correction value to control the tilt of the optical member (40), and may perform image stabilization operations or zoom and/or autofocus operations.

For example, the control unit (810) may use the correction value to control the tilt of the optical member (40) in order to set the initial position of the optical member (40), and, while the tilt of the optical member (40) is controlled, perform a hand-shake correction operation that controls the movement of the OIS moving unit, or perform zoom and/or autofocus operations on the second and third lens assemblies (622, 624).

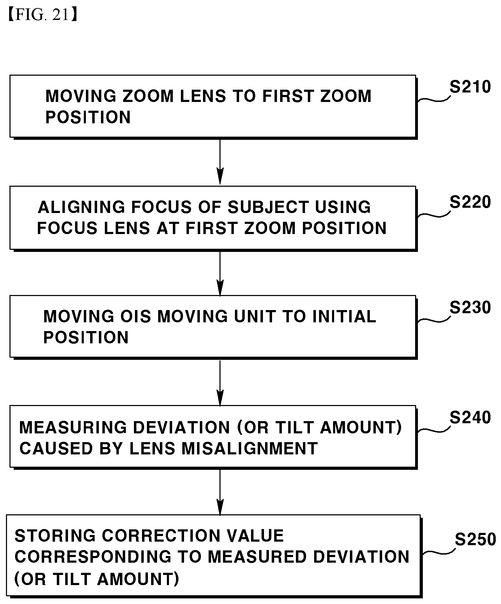

FIG. 21 illustrates an exemplary method of generating a correction value to compensate for deviations caused by lens misalignment.

Referring to FIG. 21, the control unit (810) moves the second lens assembly (622), which is a zoom lens, to a first zoom position (S210). For example, the first zoom position may be a telephoto (tele) position. In another embodiment, the first zoom position may be a wide-angle (wide) position.

For example, the wide position may be a position that corresponds to the minimum zoom ratio among the zoom ratios that the camera device (200) can achieve, and the tele position may be a position that corresponds to the maximum zoom ratio among the zoom ratios that the camera device (200) can achieve.

For example, the wide position may be the 3× zoom position and the tele position may be the 5× zoom position, but this is not limited thereto. Information regarding the first zoom position may be stored in the control unit (810, 780).

In another embodiment, the first zoom position may correspond to an intermediate magnification situated between the telephoto position and the wide position.

Next, the control unit (810) moves the third lens assembly (624), which is the focus lens, from the first zoom position to focus on the subject (S220).

Next, the control unit (810) drives the second actuator (320) to move the OIS moving unit (e.g., holder (30)) to its initial position (S230).

For example, the initial position of the OIS moving unit (e.g., the holder (30)) may be a position in which the exit surface (8b) of the optical member (40) is parallel to the imaging area of the image sensor (540).

Or, for example, the initial position of the OIS moving unit (e.g., the holder (30)) may ideally be such that, provided there is no misalignment in the lens assembly and the optical axis of the lens assembly is aligned with a predetermined position on the image sensor (540) (e.g., the center of the imaging area), the center of the exit surface (8b) of the optical member (40) is aligned with the center (or a position where the optical axes of the lens assembly and the optical member (40) are aligned). Alternatively, the initial position of the OIS moving unit (e.g., holder (30)) may be a position where, under the same conditions, the exit surface (8b) of the optical member (40) and the optical axis of the lens assembly are perpendicular to each other.

Next, the control unit (810) measures the deviation (or tilt amount) caused by the misalignment (or tilt) of the lens assembly (or lens) at the initial position of the OIS moving unit (e.g., the holder (30)) (S240).

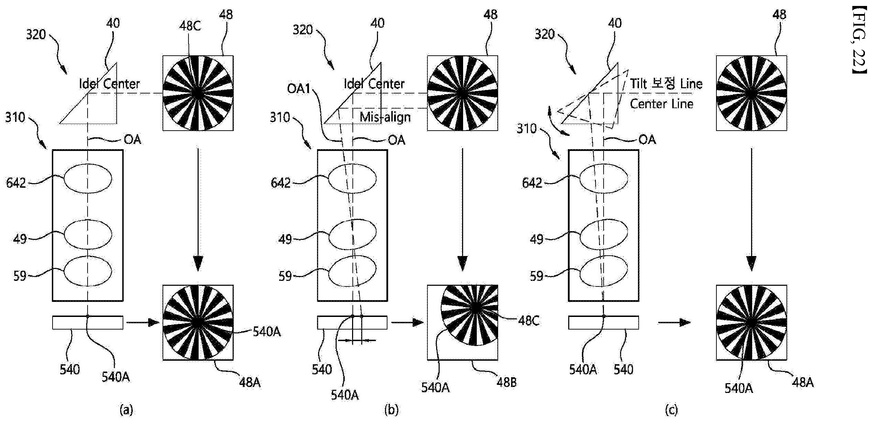

For example, the deviation at the initial position of the OIS moving unit may be measured in accordance with the definition of deviation described in step S110. The measurement of deviation is described in detail in FIG. 22.

Next, the control unit (810) stores a correction value corresponding to the measured deviation (or tilt amount) (S250). For example, the correction value may be stored in the memory of the second driver (260).

In another embodiment, the correction value may be stored in the memory of the first driver (542). Alternatively, in yet another embodiment, it may be stored in the memory of the control unit (780) of the optical device (200A) or in the AP (Application Processor).

FIG. 22 illustrates the correction of deviations caused by distortion of the lens assembly or lens, and deviations caused by the movement of the OIS moving unit.

FIG. 22(a) illustrates an ideal state in which no distortion occurs in the lens assembly or lens. In FIG. 22(a), the optical center (or optical axis (OA)) of the lens assembly (or lens) can be aligned with the center (540A) of the imaging area of the image sensor (540), and the image (48A) of the subject (48) detected in the imaging area of the image sensor (540) can be displayed exactly as the subject (48) appears in reality. For example, the center (48C) of the image (48A) of the subject (48) can be aligned with the center (540A) of the image sensor (540).

FIG. 22(b) illustrates a case where misalignment has occurred in the lens assembly or the lens. In FIG. 22(b), the optical center (or optical axis (OA1)) of the lens assembly (or lens) is not aligned with the center (540A) of the image sensor (540), consequently, due to the misalignment of the lens assembly or lens, the center (48C) of the image (48B) of the subject (48) detected by the image sensor (540) does not coincide with the center (540A) of the image sensor (540) and may be positioned offset from the center (540A) of the image sensor (540). This can be referred to as a misalignment, or tilt, of the optical center of the lens assembly (or lens).

Consequently, in FIG. 22(b), the image (48B) of the subject (48) may become distorted, and resolution may be reduced.

For example, the deviation may be the difference between the coordinate values of the center (540A) of the imaging area of the image sensor (540) and the coordinate values of the point (48C) where the misaligned optical axis (OA1) intersects or aligns with the imaging area of the image sensor (540). For example, the deviation may be the difference between the coordinate value of the center (540A) of the image sensor's (540) imaging area and the coordinate value of the center (48C) of the subject (48B).

In FIG. 22(c), by moving the optical member (40) of the OIS moving unit, or by rotating or tilting it by a predetermined angle, based on a correction value corresponding to the deviation, the point where the optical axis intersects the imaging area of the image sensor (540) can be aligned with the center (540A) of the image sensor (540). Consequently, the center of the image of the subject (48) detected by the image sensor (540) can be aligned with the center of the image sensor, distortion of the subject's (48) image caused by misalignment of the lens assembly (or lens) can be prevented, and resolution can be improved.

In the embodiment of FIG. 21, the deviation measured when the second lens assembly (622) is in the telephoto position is also utilized at other zoom positions of the second lens assembly (622). Of course, the deviation may differ when the second lens assembly (622) is at a different zoom position; however, this is because the telephoto position corresponds to high magnification, and consequently, the image is significantly affected by distortion caused by the deviation resulting from the misalignment of the lens assembly (or lens).

Here, the correction value may be a value for moving the optical member (40) of the OIS moving unit of the second actuator (320) to a target position, or for rotating it by a preset angle, in order to correct or compensate for the misalignment of the lens assembly (or lens).

Specifically, the correction value may be a value for rotating or tilting the optical member (40) to a target position so that the point where the optical axis (or optical center) and the imaging area of the image sensor (540) intersect aligns with the center (540A) of the image sensor (540).

In the embodiment, since the OIS moving unit is rotated by means of feedback] control using the OIS position sensor unit (240), the correction value may be a code value (or data value) relating to the output of the OIS position sensor unit (240) corresponding to the target position. For example, the correction value may be a value obtained by analogue-to-digital conversion of the output of the OIS position sensor unit (240) at the target position.

Specifically, the correction value may include a first correction code value (first data value) relating to the output of the first OIS position sensor (240A, 240B) corresponding to the target position, and a second correction code value (second data value) relating to the output of the second OIS position sensor (240C) corresponding to the target position.

For example, the deviation may include an x-axis deviation in the x-axis] direction and a y-axis deviation in the y-axis direction. For example, the x-axis deviation may be the difference between the x-coordinate value of the center (540A) and the x-coordinate value of the point (48C), and the y-axis deviation may be the difference between the y-coordinate value of the center (540A) and the y-coordinate value of the point (48C).

For example, the first and second correction code values may be set based on the x-axis deviation and the y-axis deviation. For example, the first correction code value may be set based on one of the x-axis deviation and the y-axis deviation, and the second correction code value may be set based on one of the other of the x-axis deviation and the y-axis deviation.

The control unit (810), for example, the second driver (260), receives the output signal from the OIS position sensor (240) and can control the drive signal applied to the OIS coil (230) using the code value (or data value) and correction value derived from the analogue-to-digital conversion of the received output signal. By controlling the drive signal applied to the OIS coil (230), the control unit (810) can move the OIS moving part, or the optical member (40) to the target position; thereby, the embodiment can correct deviations (or tilt) of the optical center caused by distortion of the lens assembly (or lens), prevent image distortion, and improve resolution.

For example, the control unit (810) may control the drive signal applied to the OIS coil (230) so that the code value (or data value) resulting from the analogue-to-digital conversion converges to the correction value.

For example, the control unit (810), such as the second driver (260), may receive a first output signal from the first OIS position sensor (240A, 240B) and a second output signal from the second OIS position sensor (240C), and control the drive signal applied to the OIS coil (230) such that the code values (or data values) resulting from the analogue-to-digital conversion of each of the received first and second output signals converge to the first and second correction code values.

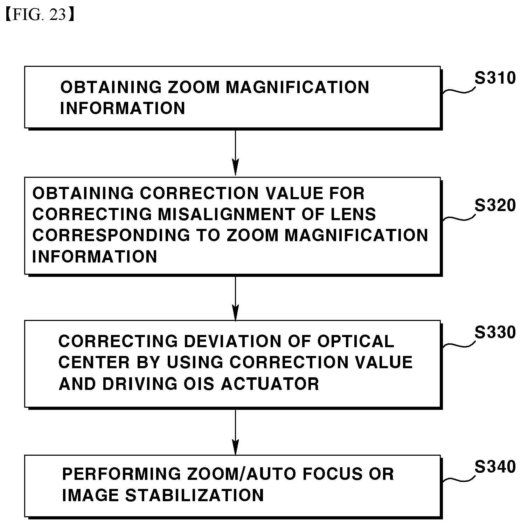

FIG. 23 is a flowchart illustrating a control method of a control unit (810) for performing zooming and AF, or performing image stabilization, in a camera device according to another embodiment.

Referring to FIG. 23, zoom magnification information (or zoom position information) is acquired (S310). The zoom magnification information may be determined by the user's selection or input, and the control unit (810) may receive the zoom magnification information determined by the user. For example, the zoom magnification information may be received from the control unit (780) of the optical device (200A).

The control unit (810), for example, the second driver (260), acquires a correction value to correct or compensate for lens misalignment corresponding to the zoom magnification information (S320).

Next, the OIS actuator is driven using the correction value to correct the deviation of the optical axis (S330).

Next, while the deviation of the optical axis (or optical center) has been corrected, zoom/autofocus operation or image stabilization operation is performed at the zoom position corresponding to the acquired zoom magnification information (S340).

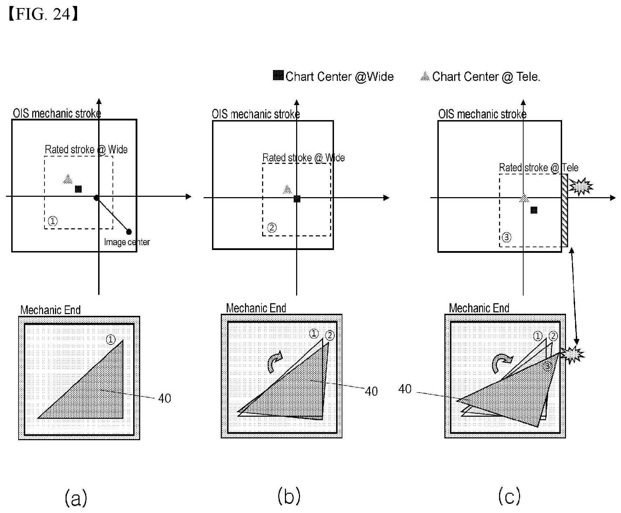

FIG. 24 is a diagram illustrating the considerations to be taken into account when generating correction values to compensate for deviations caused by lens distortion.

In FIG. 24, the OIS mechanical stroke refers to the image area detectable by the image sensor through OIS operation. The image center (•) is the center of the image detected by the image sensor and is located at the center of the x-axis and y-axis. Within the OIS mechanical stroke, ▪ denotes the chart center at wide magnification. Within the mechanical stroke, △ denotes the chart center at tele magnification. Rated stroke @ Wide denotes the operational range that must be secured at wide magnification. Rated stroke @ Tele denotes the operational range that must be secured at tele magnification. Mechanical End denotes the physical range within which the optical element (40) can be driven.

Referring to FIG. 24(a), when the optical member (40) is in its home position (①), the chart center (■) at wide magnification is located at the top left relative to the image center (•); therefore, this is a tilting state requiring chart OC (Optical Center) compensation. Referring to FIG. 24(b), if the optical member (40) is tilted clockwise (①→②) to perform OC compensation, the chart center (■) at wide magnification moves to the lower right, causing the image center (•) and the chart center (■) at wide magnification to coincide.

Subsequently, as shown in FIG. 24(b), since the chart center (■) at wide magnification and the chart center (Δ) at telephoto magnification do not coincide, when changing the zoom magnification from wide to telephoto, the chart center (Δ) at telephoto magnification must be aligned with the image center (•). If the optical member (40) is tilted clockwise again (②→③) to compensate for the OC shift, the chart center (Δ) at the telephoto magnification moves to the lower right, causing the image center (•) and the chart center (Δ) at the telephoto magnification to align.

At this point, the optical member (40) may collide with the physical ranges (Mechanical End) that it can drive, resulting in functional failure or jitter. Here, the tilting of the optical member may refer to rotation in three dimensions.

As shown in FIG. 24, if the tilting direction of the optical member (40) is the same during OC compensation and OC Shift compensation, sufficient tilting space must be secured for the optical member (40). However, due to the physical space in which the optical member (40) is disposed and the various specifications of the mobile phones in which the camera module is installed, there are limitations on increasing the size of the camera module; consequently, there are also limitations on extending the OIS mechanical stroke.

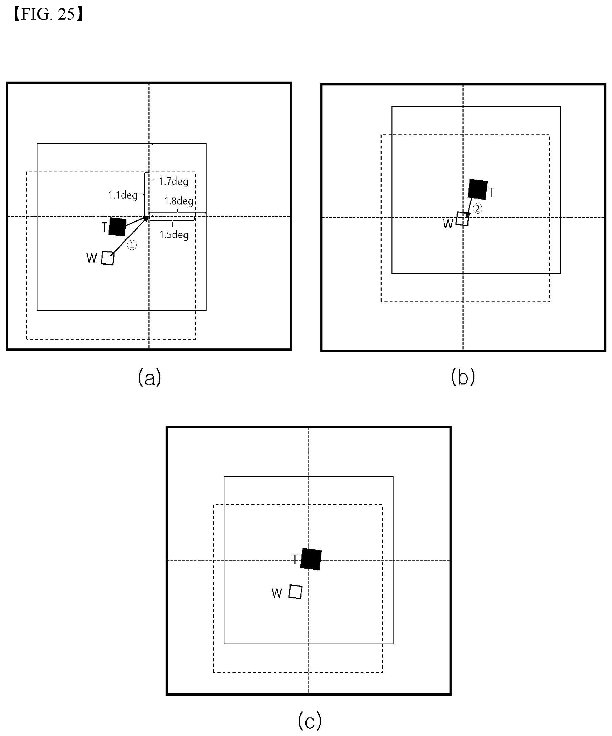

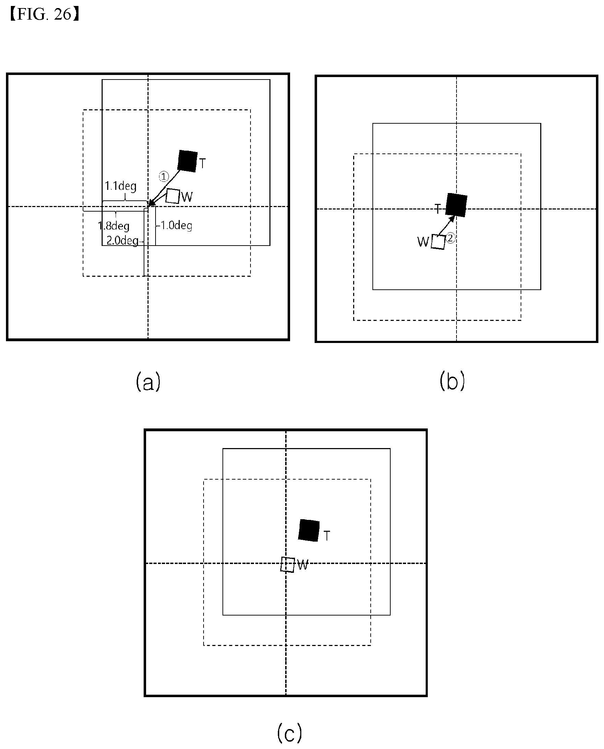

FIGS. 25 and 26 are diagrams illustrating the process of generating OC compensation and OC shift correction values, taking into account the physical limitations of the OIS mechanical stroke. In FIGS. 25 and 26, the outermost rectangular area represents the image chart area detected by the image sensor, and the centers of the x-axis and y-axis correspond to the image center. The solid-lined rectangular area within the outermost rectangular area represents the chart area (or image area) at the telephoto magnification, and may correspond to the area within ±2.4 degrees from the chart center (■) at the telephoto magnification. The dotted rectangular area within the outermost rectangular area denotes the chart area (or image area) at wide magnification, and may correspond to the region within ±2.4 degrees of the chart center (□) at wide magnification. This is merely an example; the size of the chart area at telephoto magnification may differ from that at wide magnification.

First, a correction value is generated to move the chart center of the magnification that is further from the image center-between the chart center of the wide magnification and the chart center of the tele magnification-based on the image center. Subsequently, a correction value is generated to move the chart center of the remaining magnification to the image center. By generating correction values in this manner, OC shift compensation can be achieved by tilting the optical member (40) in different tilting directions from the initial drive when changing the zoom magnification from wide magnification to telephoto magnification.

FIG. 25(a) shows the chart before OC compensation; relative to the image center, the center (□) of the wide-magnification chart is located further away than the center of the telephoto-magnification chart (▪). Viewing the image chart area in a coordinate system with x and y axes, the chart center for wide magnification (□) is located approximately at (-0.9, -1.3), while the chart center for telephoto magnification (■) is located approximately at (-0.6, -0.7).

As shown in FIG. 25(b), a correction value is generated to move the chart center (□) of the wide magnification, which is located at a distant position relative to the image center, towards the image center. At this point, the optical member (40) can be seen as tilting in the (+,+) direction to move the chart center (□) of the wide magnification in the (+,+) direction.

Subsequently, as shown in FIG. 25(c), a correction value is generated to move the chart center (■) of the telephoto magnification to the image center. At this point, the optical member (40) can be seen to tilt in the (-,-) direction, thereby moving the chart center (■) of the telephoto magnification in the (-,-) direction.

FIG. 26(a) shows the chart before OC compensation; relative to the image center, the chart center (■) at the telephoto magnification is located further away than the chart center (□) at the wide magnification. Viewing the image chart area in a coordinate system with x and y axes, the chart center (□) for the wide magnification is located approximately at (0.6, 0.4), while the chart center (■) for the telephoto magnification is located approximately at (1.3, 1.4).

As shown in FIG. 26(b), a correction value is generated to move the chart center (■) of the telephoto magnification, which is located at a distant position relative to the image center, towards the image center. At this point, the optical member (40) can be seen as tilting in the (-,-) direction to move the chart center (■) of the telephoto magnification in the (-,-) direction.

Subsequently, as shown in FIG. 26(c), a correction value is generated to move the chart center (□) of the wide magnification towards the image center. At this point, the optical member (40) can be regarded as tilting in the (-,-) direction to move the chart center (□) of the wide magnification in the (-,-) direction.

In other words, by first generating a correction value based on the chart center at a distant position relative to the image center, the OC shift can be compensated for by tilting the optical member (40) in different directions, thereby securing a margin within the physical range for the tilting of the optical member (40).

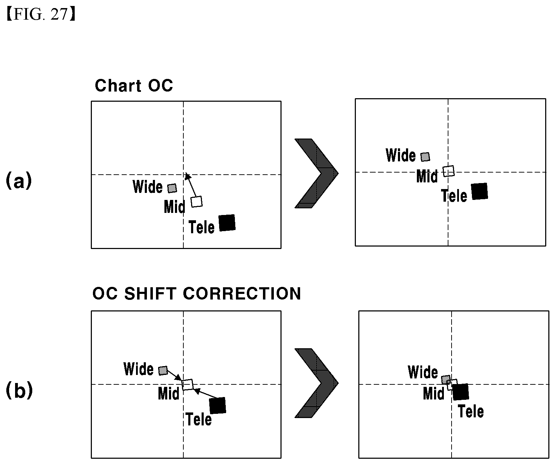

FIG. 27 is a diagram illustrating a method for generating correction values for OC compensation and OC shift compensation that differs from the methods described in FIG. 25 and FIG. 26.

Referring to FIG. 27(a), a tilting correction value is first generated for the optical member (40) such that the chart center of the mid magnification, which lies between the wide and telephoto magnifications, is aligned with the image center of the image chart area. Referring to FIG. 27(b), a correction value is generated such that the chart centers for wide and telephoto magnifications coincide with the image center. In this case, it is possible to generate correction values such that the chart centers for magnifications other than wide and telephoto magnifications also coincide with the image center.

Therefore, as the chart centers for wide-angle and telephoto magnifications lie in different directions relative to the chart center for mid-range magnification, the optical member (40) can be tilted in different directions to compensate for OC shift.

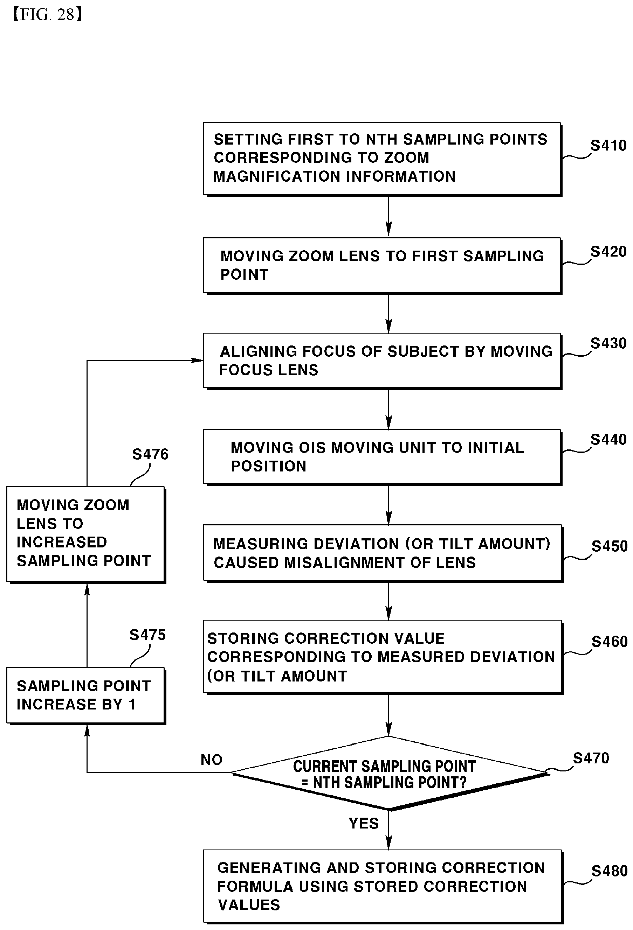

FIG. 28 illustrates a method for generating correction values to compensate for deviations caused by lens misalignment corresponding to zoom magnification information.

Referring to FIG. 28, the control unit (810) sets first to Nth (where N is a natural number greater than 1) sampling points regarding the zoom position of the second lens assembly (622) corresponding to the zoom magnification information (S410).

For example, the zoom magnification information may correspond to the Mth magnification, where M is a positive rational number.

For example, the zoom magnification information may be the first magnification, the third magnification, or the fifth magnification, etc. For example, the sampling point may be a zoom position of the second lens assembly (622) that matches the zoom magnification information. For example, the sampling point may include the telephoto position and the wide-angle position.

Next, the control unit (810) drives the first actuator (310) to move the second lens assembly (622) to the first sampling point (S420).

Next, the control unit (810) drives the first actuator (310) to move the third lens assembly (624) and focus on the subject (S430).

Next, the control unit (810) drives the second actuator (320) to move the OIS moving unit (e.g., the holder (30)) to its initial position (S440). The initial position of the OIS moving unit may be as described in FIG. 21.

Next, the control unit (810) measures the deviation (or amount of tilt) caused by the misalignment (or tilt) of the lens assembly (or lens) at the initial position of the OIS moving unit (e.g., the holder (30)) (S450). The description in S240 may be applied or analogously applied to S450.

Next, the control unit (810) stores a correction value corresponding to the measured deviation (or tilt amount) (S460). The description in S250 applies to or can be analogously applied to S460.

Next, the control unit (810) determines whether the current sampling point is the Nth sampling point (S470).

Next, if the current sampling point is not the Nth sampling point, the control unit (810) increases the sampling point by 1 (S475) and moves the second lens assembly (622) to the increased sampling point (S476).

Next, steps S430 through S470 are repeated. Next, if the current sampling point is the Nth sampling point, the control unit (810) generates and stores a correction equation using the stored correction values corresponding to the first through Nth sampling points (S480).

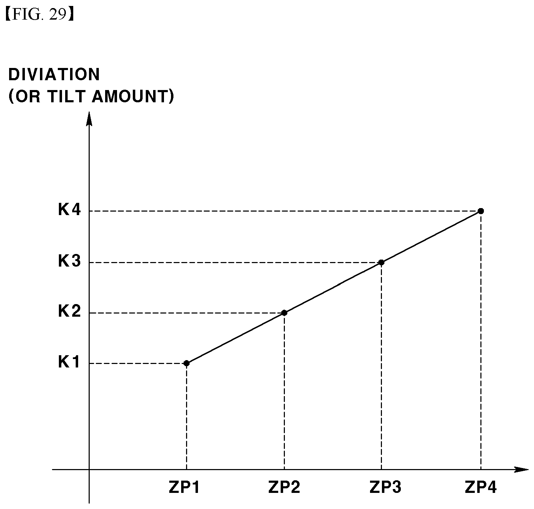

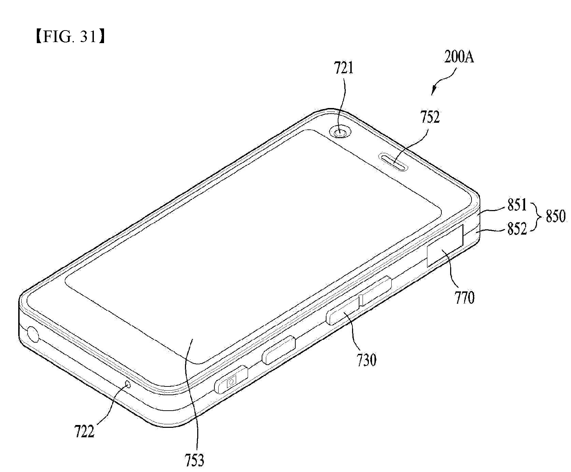

FIG. 29 illustrates the deviations (or tilt amounts) corresponding to the sampling points (ZP1 to ZP4) acquired by the method according to the embodiment of FIG. 28. In FIG. 31, ZP1 may be the wide position, and ZP4 may be the tele position. In FIG. 31, the number of sampling points may be four, but in other embodiments, it may be two or more.

Referring to FIG. 29, the deviations (K1 to K4) corresponding to each sampling point (ZP1 to ZPN, N=4) can be obtained using the method described in the embodiment of FIG. 28.

The control unit (810, 780) interpolates the deviations (K1 to K4) corresponding to the sampling points (ZP1 to ZP4) using an interpolation method, and based on the interpolated results, can acquire, calculate, or derive an interpolation formula or interpolation data regarding the deviations. Using the interpolation formula or interpolation data, deviations at zoom positions other than the sampling points (ZP1 to ZPN, N=4) can be estimated.

For example, the interpolation method may include at least one of various interpolation methods. For example, the interpolation method may include linear interpolation, polynomial interpolation, spline interpolation, exponential interpolation, log-linear interpolation, Lagrange interpolation, Newton interpolation, and bilinear interpolation.

For example, by interpolating two deviations (e.g., K1 and K2) corresponding to two adjacent sampling points (e.g., ZP1 and ZP2), a first interpolation equation can be obtained based on the interpolated results. In the interval between ZP1 and ZP2, the first interpolation equation can be used to estimate the deviations at zoom positions between ZP1 and ZP2. In FIG. 31, the zoom positions may include a first interval between ZP1 and ZP2, a second interval between ZP2 and ZP3, and a third interval between ZP3 and ZP4. Interpolation functions corresponding to each interval may be obtained, calculated, or derived, and these interpolation functions may be used to obtain, calculate, estimate, or derive the deviation corresponding to each interval.

FIG. 29 illustrates a case where the deviation increases as the magnification increases from low to high,

but in other embodiments, the deviation may decrease as the magnification increases from low to high. In yet another embodiment, the deviation may increase in some intervals, decrease in others, and remain constant in others.

In FIG. 21, the control unit (810) stores a single correction value, whereas in FIG. 28, the control unit (810) can store correction values for successive zoom positions. For example, the correction values obtained in FIG. 28 may be defined by an algorithm or mathematical formula and stored in the control unit (810). The control unit (810) may obtain a correction value corresponding to the zoom position or zoom magnification information of the second lens assembly (622) via an algorithm or mathematical formula.

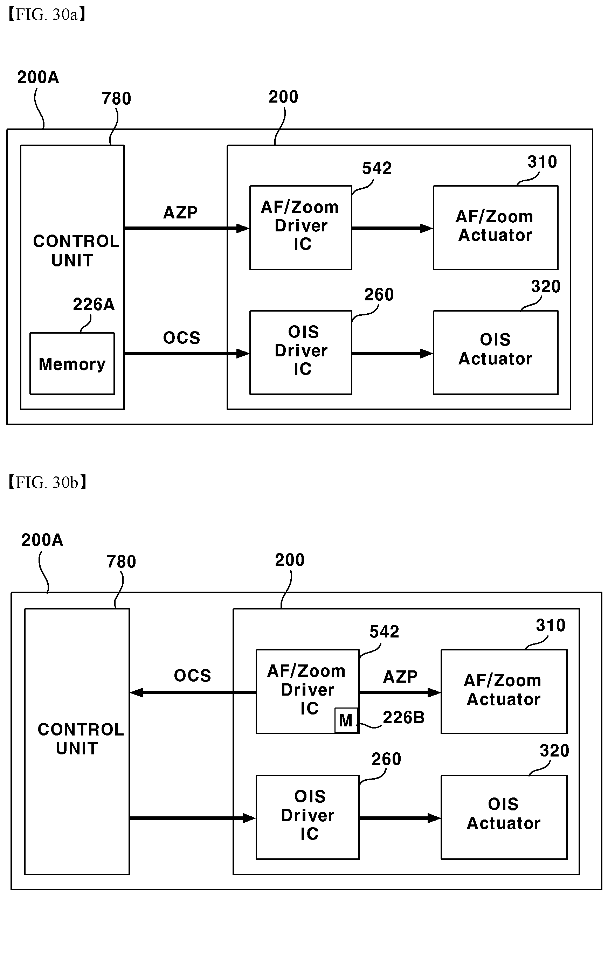

FIG. 30a illustrates an embodiment relating to the provision of information (AZP) regarding the zoom position and focus position, and correction values (OCS).

Referring to FIG. 30a, the control unit (780) of the optical device (200A) may store information (AZP) regarding the zoom position (or zoom magnification) and focus position, as well as correction values (OSC). The control unit (780) may be an Application Processor (AP), but is not limited thereto.

The optical device (200A) may include memory (226A) for storing information (AZP) regarding the zoom position (or zoom ratio) and focus position, as well as correction values (OSC). The memory (226A) may be incorporated within the control unit (780) or provided separately from the control unit (780).

The control unit (780) of the optical device (200A) may transmit a correction value (OCS) to the second driver (260) of the camera device (200). The second driver (260) may control the movement or rotation of the OIS moving unit (holder (30) and optical member (40)) using the correction value received from the control unit (780).

For example, the second driver (260) may use the correction value received from the control unit (780) to control the drive signal applied to the OIS coil (230) of the second actuator (320).

The control unit (780) of the optical device (200A) may transmit zoom position information (or zoom magnification) and focus position information to the first driver (542) of the camera device (200). The first driver (542) can control the movement of the second lens assembly (622) using the zoom position information (or zoom magnification) received from the control unit (780), and can control the movement of the third lens assembly (624) using the focus position information.

For example, the first driver (542) may use the zoom position information (or zoom magnification) to control the first drive signal applied to the first coil (120A), and may use the focus position information to control the second drive signal applied to the second coil (120B).

Using a protocol for data communication, such as I2C communication, the control unit (780) can transmit and receive data, such as zoom magnification information (or zoom position information) and focus position information, with the first driver (542) and the second driver (260) respectively.

FIG. 30b illustrates another embodiment relating to the provision of information concerning zoom position and focus position, as well as correction values.

Referring to FIG. 30b, the entity responsible for storing zoom position information (or zoom magnification), focus position information, and correction values (OSC) may be a first driver (542). The first driver (542) may include memory (226B) for storing zoom position information (or zoom magnification) and focus position information, as well as the correction value (OSC).

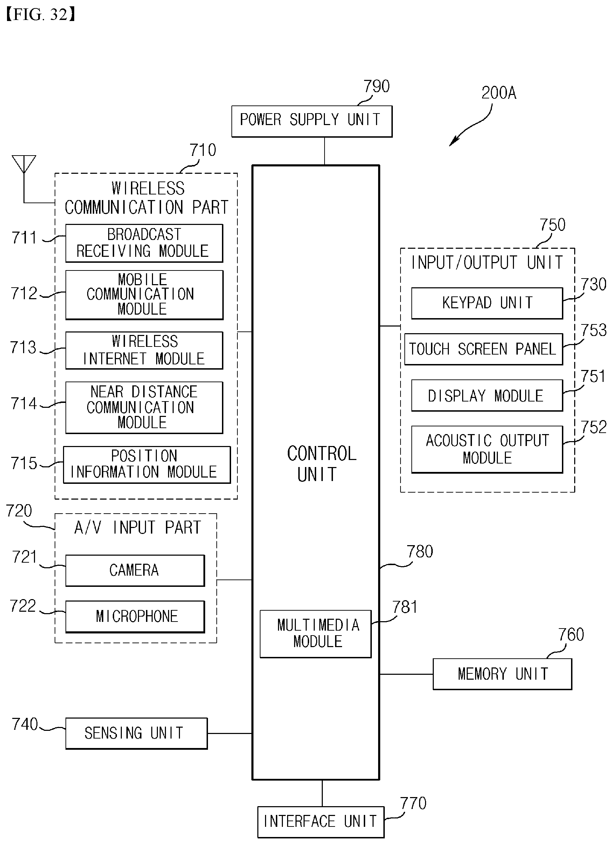

The first driver (542) may control the movement of the second lens assembly (622) using the zoom position information (or zoom magnification) stored in the memory (226B), and may control the movement of the third lens assembly (624) using the focus position information stored in the memory (226B). The functions of the first driver (542) may be applied or inferred from the description provided in FIG. 32a.

The first driver (542) may transmit a correction value (OSC) to the control unit (780), and the control unit (780) may transmit the correction value (OSC) received from the first driver (542) to the second driver (260). The functions of the first driver (260) may be applied or inferred from the description in FIG. 30a.

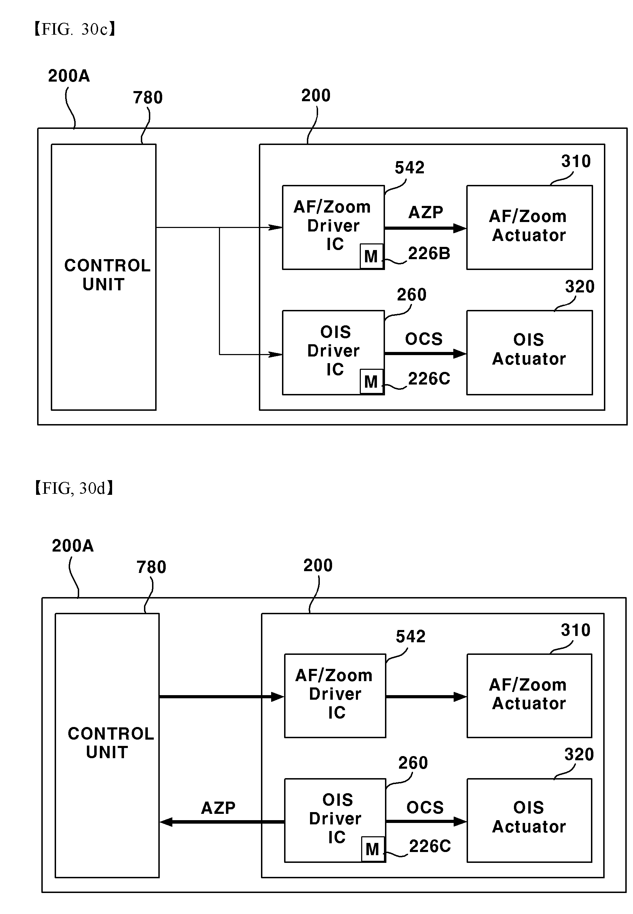

FIG. 30c illustrates another embodiment regarding the provision of information on zoom position and focus position, as well as correction values, as shown in FIG. 30b.

Referring to FIG. 30c, the entity storing the zoom position information (or zoom multiplication) and the focus position information may be the first driver (542), and the entity storing the correction value (OSC) may be the second driver (260).

For example, the first driver (542) may include memory (226B) for storing zoom position information (or zoom magnification) and focus position information. Furthermore, the second driver (260) may include memory (226C) for storing the correction value (OSC).

The function of the first driver (542) may be applied or applied by analogy as described in FIG. 2b. The second driver (260) may control the movement or rotation of the OIS moving unit (holder (30) and optical member (40)) using the correction value (OSC) stored in the memory (226C). The function of the second driver (260) may be applied or applied by analogy as described in FIG. 30a.

In FIG. 30c, as the zoom position information (or zoom magnification) and focus position information are stored in the first driver (542), and the correction value (OSC) is stored in the second driver (260), the first and second drivers (542, 260) may drive the first and second actuators (310, 320) at a higher speed.

FIG. 30d illustrates another embodiment regarding the provision of information on zoom position and focus position, and provision of the correction value.

Referring to FIG. 30d, the entity storing the information on zoom position and focus position (AZP), and the correction value (OSC), may be the second driver (260). The second driver (260) may include memory (226C) for storing zoom position information (or zoom magnification), focus position information, and correction values (OSC).

The second driver (260) may transmit information (AZP) regarding the zoom position and focus position to the control unit (780), and the control unit (780) may transmit the information (AZP) regarding the zoom position and focus position received from the second driver (260) to the first driver (260). The functions of the first driver (260) may be applied or inferred as described in FIG. 30a.

The second driver (260) may control the movement or rotation of the OIS moving unit (holder (30) and optical member (40)) using correction values stored in memory (226C). The function of the second driver (260) may be applied or applied by analogy as described in FIG. 32a.

If, due to misalignment of the lens assembly (or lens), the optical center of the lens assembly (or lens) does not coincide with the center of the image sensor (540), distortion occurs in the image detected by the image sensor (540), which may result in a reduction in the resolution of the camera device. In the embodiment, by controlling the movement (or rotation) of the OIS moving unit (or optical member (40)), it is possible to correct or compensate for the misalignment of the optical center or the deviation of the optical center caused by the misalignment of the lens assembly (or lens), thereby improving the resolution of the camera device.

Furthermore, the camera device (200) according to the embodiments may be included in optical instruments that utilize the properties of light-such as reflection, refraction, absorption, interference and diffraction-to form images of objects in space, and which are intended to enhance visual acuity, record and reproduce images using lenses, or perform optical measurements, image transmission or communication. For example, the optical instrument according to the embodiment may include mobile phones, smartphones, portable smart devices, digital cameras, laptop computers, digital broadcasting terminals, PDAs (Personal Digital Assistants), PMPs (Portable Multimedia Players) and navigation systems, but is not limited thereto; any device for capturing video or photographs is possible.

FIG. 31 shows a perspective view of an optical instrument (200A) according to an embodiment, and FIG. 32 shows a schematic diagram of the optical instrument (200A) shown in FIG. 31.

Referring to FIGS. 31 and 32, the optical instrument (200A, hereinafter referred to as a portable 'terminal') comprises a body (850), a wireless communication unit (710), an A/V input unit (720), a sensing unit (740), an input/output unit (750), a memory unit (760), an interface unit (770), a control unit (780), and a power supply unit (790).

The body (850) shown in FIG. 31 is in the form of a bar, but is not limited thereto; it may take various forms, such as a slide type, a folder type, a swing type or a swivel type, in which two or more sub-bodies are joined so as to be capable of relative movement.

The body (850) may include a case (casing, housing, cover, etc.) that forms the exterior. For example, the body (850) may be divided into a front case (851) and a rear case (852). The space formed between the front case (851) and the rear case (852) may house various electronic components of the terminal.

The wireless communication unit (710) may comprise one or more modules that enable wireless communication between the terminal (200A) and a wireless communication system, or between the terminal (200A) and the network in which the terminal (200A) is located. For example, the wireless communication unit (710) may comprise a broadcast reception module (711), a mobile communication module (712), a wireless internet module (713), a short-range communication module (714) and a location information module (715).

The A/V (Audio/Video) input unit (720) is for inputting audio or video signals and may include a camera (721) and a microphone (722), amongst others.

The camera (721) may comprise a camera device (200) according to an embodiment.

The sensing unit (740) detects the current state of the terminal (200A), such as the open/closed status of the terminal (200A), the position of the terminal (200A), whether the user is in contact with it, the orientation of the terminal (200A), and the acceleration/deceleration of the terminal (200A), and generate sensing signals to control the operation of the terminal (200A). For example, if the terminal (200A) is a slide phone, it can sense whether the slide phone is open or closed. Furthermore, it is responsible for sensing functions related to whether the power supply unit (790) is supplying power and whether external devices are connected to the interface unit (770).

The input/output unit (750) is intended to generate inputs or outputs related to visual, auditory or tactile sensations. The input/output unit (750) can generate input data for controlling the operation of the terminal (200A) and can also display information processed by the terminal (200A).

The input/output unit (750) may include a keypad unit (730), a display module (751), an audio output module (752), and a touch screen panel (753). The keypad unit (730) can generate input data via keypad input.

The display module (751) may include a plurality of pixels whose colour changes in response to electrical signals. For example, the display module (751) may include at least one of a liquid crystal display (LCD), a thin-film transistor liquid crystal display (TFT-LCD), an organic light-emitting diode (OLED), a flexible display, or a three-dimensional display (3D display).

The audio output module (752) can output audio data received from the wireless communication unit (710) during call reception, call mode, recording mode, voice recognition mode, or broadcast reception mode, or it can output audio data stored in the memory unit (760).

The touch screen panel (753) can convert changes in capacitance caused by the user touching a specific area of the touch screen into an electrical input signal.

The memory unit (760) may store programs for processing and control by the control unit (780), and may temporarily store data being input or output (e.g., phone book entries, messages, audio, still images, photographs, videos, etc.). For example, the memory unit (760) may store images captured by the camera (721), such as photographs or videos.

The interface unit (770) acts as a conduit for connecting to external devices linked to the terminal (200A). The interface unit (770) receives data from external devices, supplies power to and distributes it to the various components within the terminal (200A), and facilitates the transmission of data from within the terminal (200A) to external devices. For example, the interface unit (770) may include wired/wireless headset ports, external charger ports, wired/wireless data ports, memory card ports, ports for connecting devices equipped with identification modules, audio I/O (Input/Output) ports, video I/O (Input/Output) ports, and earphone ports.

The controller (780) can control the overall operation of the terminal (200A). For example, the controller (780) can perform relevant control and processing for voice calls, data communication, video calls, and so on.

The control unit (780) may be provided with a multimedia module (781) for multimedia playback. The multimedia module (781) may be implemented within the control unit (780) or separately from the control unit (780).

The control unit (780) may perform pattern recognition processing capable of recognizing handwritten input or drawing input made on the touch screen as characters and images, respectively.

The power supply unit (790) may, under the control of the control unit (780), receive power from an external or internal source and supply the power required for the operation of each component.

The camera device (200) may be disposed on the body (850) of the portable terminal (200A) such that the incident surface (8A) of the optical member (40) is disposed parallel to one side (e.g., the rear or front) of the body (850). For example, the second actuator (320), the first actuator (310), and the image sensing unit (330) may be arranged in a direction from the upper end to the lower end of the body (850) of the portable terminal (200A). Another embodiment may involve the camera device being rotated by 90 degrees relative to the arrangement shown in FIG. 31. That is, the second actuator (320), the first actuator (310), and the image sensing unit (330) may be arranged in a direction extending from the first long side of the body (850) of the portable terminal (200A) towards the second long side. Through this arrangement, the embodiment can reduce spatial constraints when mounting the camera device (200) on the portable device (200A) and improve the design flexibility of the portable device.

The features, structures and effects described in the above embodiments are included in at least one embodiment of the present invention and are not necessarily limited to a single embodiment. Furthermore, the features, structures and effects exemplified in each embodiment may be combined or modified for other embodiments by a person skilled in the art to which the embodiments belong. Therefore, matters relating to such combinations and modifications should be interpreted as falling within the scope of the present invention.

A person skilled in the art relating to the present invention will understand that the invention may be implemented in modified forms without departing from the essential characteristics of the above description. Therefore, the disclosed methods should be considered from an illustrative perspective rather than a limiting one. The scope of the invention is defined by the claims rather than the foregoing description, and all variations falling within the equivalent scope should be interpreted as falling within the scope of the invention.

## Claims

1. A camera device, comprising:
a lens assembly including a fixed lens group and a movable lens group movable in a first axis direction;
an image sensor that detects light passing through the fixed lens group and the movable lens group;
an optical member that irradiates light to the lens assembly and is tiltable with respect to a second or third axis perpendicular to the first axis; and
a control unit that stores a correction value for compensating for misalignment of an optical axis of the lens assembly corresponding to zoom magnification information for the movable lens group, wherein
the control unit controls the tilt of the optical member on the basis of the correction value,
the zoom magnification for the movable lens group includes a minimum magnification, a maximum magnification, and an intermediate magnification between the minimum magnification and the maximum magnification, and
the correction value sets an initial position of the optical member on the basis of the intermediate magnification and relates to a tilt amount of the optical member for the minimum magnification and the maximum magnification.

2. The camera device of claim 1, wherein the correction values relate to the initial position of the optical member for correcting the misalignment between the center of the fixed lens group and the center of the first lens group.

3. The camera device of claim 1, wherein the control unit uses the correction value to move the lens assembly in the optical axis direction while controlling the tilt of the optical member, thereby performing zoom or autofocus operations.

4. The camera device of claim 1, wherein the control unit includes a first driver for controlling the movement of the first lens group; and a second driver for storing the correction value and controlling the tilt of the optical member using the correction value.

5. The camera device of claim 1, wherein the tilt amount of the optical member at the minimum magnification and the tilt amount of the optical member at the maximum magnification are values in opposite directions.

6. The camera device of claim 1, comprising: a first position sensor for detecting displacement relative to the second axis of the optical member; and a second position sensor for detecting displacement relative to the third axis of the optical member.

7. The camera device of claim 1, wherein the control unit uses the correction value to control the tilt of the optical member, thereby performing image stabilization.

8. The camera device of claim 1, wherein the movable lens group includes a zoom lens group and a focus lens group.

9. A camera device, comprising: a lens assembly including a fixed lens group and a movable lens group movable in a first axis direction; an image sensor that detects light passing through the fixed lens group and the movable lens group; an optical member that irradiates light to the lens assembly and is tiltable with respect to a second or third axis perpendicular to the first axis; and a control unit that stores a correction value for compensating for misalignment of an optical axis of the lens assembly corresponding to zoom magnification information for the movable lens group, wherein the control unit controls the tilt of the optical member on the basis of the correction value, the zoom magnification for the movable lens group includes the maximum magnification and minimum magnification, and the correction value is generated by setting an initial position for the optical member based on the chart center at the farthest position among the chart center at minimum magnification and the chart center at maximum magnification relative to the image center, which is the center of the image area of the image sensor.

10. The camera device of claim 9, wherein the control unit performs tilt correction on the optical member in a first direction to compensate for the misalignment of the optical axis of the lens assembly corresponding to the minimum magnification, and the control unit performs tilt correction on the optical member in a second direction, which is opposite to the first direction, to compensate for the misalignment of the optical axis of the lens assembly corresponding to the maximum magnification.
